# EUROPÄISCHE PATENTSCHRIFT

(11) **EP 0 694 021 B1**
(45) Veröffentlichungstag und Bekanntmachung des Hinweises auf die Patenterteilung: **01.07.1998**
(21) Anmeldenummer: 94913572.7
(22) Anmeldetag: 11.04.1994
(51) Int. Cl.: B67C 3/20, G01F 11/28, G01F 11/32

(54) **ROTIERENDE VORRICHTUNG ZUM PORTIONSWEISEN ABFÜLLEN VON FLÜSSIGKEITEN IN FLASCHEN, DOSEN ODER DGL. BEHÄLTER**
ROTATING DEVICE FOR FILLING BOTTLES, CANS OR SIMILAR CONTAINERS WITH PORTIONS OF LIQUID
DISPOSITIF ROTATIF PERMETTANT DE REMPLIR DES BOUTEILLES, DES BOITES A BOISSON OU DES RECIPIENTS ANALOGUES AVEC UNE DOSE DE LIQUIDE

(30) Priorität: 16.04.1993 DE 4312367; 18.05.1993 DE 4316516; 28.05.1993 DE 4317865; 23.07.1993 DE 4324799; 17.09.1993 DE 4331624
(43) Veröffentlichungstag der Anmeldung: 31.01.1996
(73) Patentinhaber: KRONES AG Hermann Kronseder Maschinenfabrik, D-93068 Neutraubling (DE)
(72) Erfinder: WEISS, Wilhelm, D-93138 Lappersdorf (DE)
(74) Vertreter: Grünecker, Kinkeldey, Stockmair & Schwanhäusser Anwaltssozietät
(86) Internationale Anmeldenummer: EP9401116
(87) Internationale Veröffentlichungsnummer: WO9424037

(56) Entgegenhaltungen:
- EP-A- 0 106 971
- EP-A- 0 262 258
- EP-A- 0 470 398
- FR-A- 2 018 658
- FR-A- 2 387 438

## Beschreibung

Die Erfindung betrifft eine rotierende Vorrichtung zum portionsweisen Abfüllen von Flüssigkeiten in Flaschen, Dosen oder dgl. Behälter gemäß dem Oberbegriff des Anspruchs 1.

Derartige Vorrichtungen sind in verschiedenen Bauformen bekannt:

Bei der Vorrichtung nach der französischen Patentschrift 1 595 492 ist in jeder senkrechten Dosierkammer ein frei beweglicher Kolben angeordnet, der über eine dünne Leitung mit dem Gaspolster im Vorratsbehälter für die Flüssigkeit verbunden ist. Bei geöffnetem Einlaßventil fließt die Flüssigkeit aus dem höher liegenden Vorratsbehälter unter Anheben des Kolbens in die Dosierkammer ein und steigt in der Leitung weiter an bis auf die Höhe des Füllstands im Vorratsbehälter. Da der Flüssigkeitsspiegel in den Dosierkammern durch die Kolben jederzeit abgedeckt ist, werden die Füllgenauigkeit verschlechternde Schrägstellungen und andere Verformungen des Flüssigkeitsspiegels aufgrund der Rotationsbewegung der Dosierkammern mit dem Rotor von vornherein vermieden. Allerdings ergeben sich Ungenauigkeiten durch das Flüssigkeitsvolumen in den flexiblen Leitungen, das wiederum vom Füllstand im Vorratsbehälter abhängig ist.

Bei der Vorrichtung nach der deutschen Offenlegungsschrift 30 06 995 ragt in die kolbenlosen Dosierkammern jeweils ein verstellbarer Verdrängungskörper hinein, mit dem das Dosierkammervolumen variiert werden kann. Am oberen Ende jeder Dosierkammer ist eine in den Gasraum des Vorratsbehälters für die Flüssigkeit ragende starre Leitung angeschlossen, die bei geöffnetem Einlaßventil bis zur Höhe des Füllstands im Vorratsbehälter gefüllt wird. Hier können sich zwar während des Füllens der Dosierkammern Verformungen des Flüssigkeitsspiegels einstellen, diese machen sich jedoch nicht nachteilig bemerkbar, da die Dosierkammern vollständig gefüllt bzw. überfüllt werden. Allerdings ergeben sich wiederum Ungenauigkeiten bei schwankendem Füllstand im Vorratsbehälter, der zudem durch die Rotationsbewegung der Flüssigkeit mit dem Vorratsbehälter beeinflußt wird.

Eine Befüllungsvorrichtung mit rotierend umlaufenden Dosierkammern ist in EP 0262 258 A1 beschrieben. Die Höhe des Deckels der jeweiligen Dosierkammern wird eingestellt, um verschiedene Dosiervolumina zu erhalten. In EP 0474 398 A1 ist eine rotierende Vorrichtung zum Abfüllen einer Flüssigkeit in Portionsbehältern beschrieben, bei der mit Hilfe von Verdrängerkörpern in den Dosierkammern das zu dosierende Flüssigkeitsvolumen eingestellt wird.

In EP 0106 971 ist eine stationäre Vorrichtung zum volumetrischen Messen von Flüssigkeiten beschrieben, bei der mit Hilfe eines Schwimmersensors der Flüssigkeitspegel bestimmt wird.

In FR-A-2387438 und FR-A-2018658 sind weitere stationäre Befüllvorrichtungen beschrieben, die Sensoren zur Messung des Flüssigkeitsstandes einsetzen.

Die bekannten gattungsgemäßen rotierenden Vorrichtungen zum portionsweisen Abfüllen von Flüssigkeiten in Behälter sind aufwendig und kompliziert aufgebaut sowie schwer zu reinigen und auf andere Portionsgrößen umzustellen.

Diese Nachteile sollen durch die Erfindung beseitigt werden.

Diese Aufgabe wird durch die im Kennzeichen des Anspruchs 1 angegebenen Merkmale gelöst.

Für die Ausbildung und Anordnung der Sensoren sind, je nach Art der abzufüllenden Flüssigkeit und der trotz der Rotationsbewegung der Dosierkammern geforderten hohen Meßgenauigkeit, verschiedene Möglichkeiten gegeben. Einige hiervon sind in den Ansprüchen 2 bis 10 und 21 bis 31 enthalten. Bei einer Ausbildung gemäß den Ansprüchen 21 bis 31 ist im Bereich der Meßzone eine kontinuierliche exakte Überwachung des Füllstands möglich. Innerhalb der Meßzone läßt sich der Schaltpunkt für das Einlaßventil und/oder das Auslaßventil beliebig einstellen, z.B. mit Hilfe eines vorgegebenen, variablen Schwellwerts, mit dem das Meßsignal verglichen wird. Eine mechanische Verstellung des Sensors bei einer Veränderung des Dosiervolumens ist daher nicht erforderlich. Der Sensor erzeugt vorzugsweise ein elektrisches Meßsignal, das besonders einfach verarbeitet werden kann. Die Ausbildung als Schwimmersonde mit einem konzentrisch zur Mittelachse der Dosierkammer angeordneten Führungsstab für den ringförmigen Schwimmer gemäß den Ansprüchen 26 bis 29 hat darüber hinaus den Vorzug einer besonders großen Unempfindlichkeit gegen Bewegungen des Flüssigkeitsspiegels. Es ist somit trotz der Umlaufbewegung der Dosierkammern eine sehr hohe Füllgenauigkeit möglich, auch während des Beschleunigens oder Abbremsens des Rotors. Hierzu trägt auch die Maßnahme des Anspruchs 35 bei, die zu einer besonders schlanken Bauweise der Dosierkammer mit kleiner Flüssigkeitsoberfläche führt. Der Innendurchmesser der Dosierkammer beträgt vorzugsweise 50 bis 70 Millimeter bei einer Höhe von ca. 600 mm.

Auch für die Steuerung des Füllvorgangs mit Hilfe des Sensors bzw. der Sensoren gibt es verschiedene Möglichkeiten. Einige hiervon sind in den Ansprüchen 6 und 7 angegeben, bei der im unteren Bereich der Dosierkammer bis hin zum Auslaufventil immer eine bestimmte Restmenge von Flüssigkeit verbleibt. Im Vergleich zu einem vollständigen Leerfahren der Dosierkammer ergeben sich hier enorme Vorteile, insbesondere bei Beginn des Einlaufens der Flüssigkeit in die Dosierkammer und am Ende des Auslaufens der Flüssigkeit in den zu befüllenden Behälter. Außerdem wird das Eindringen von Umgebungsluft in die Vorrichtung verhindert.

Nach einer bevorzugten Weiterbildung der Erfindung, wie sie in den Ansprüchen 32 bis 36 angegeben ist, ist das Volumen, insbesondere die Höhe der Dosierkammer wesentlich größer als die für das Volumen einer abzufüllenden Flüssigkeitsportion erforderliche Höhe. Die Höhenlage des abzufüllenden Volumens bestimmt die geodätische Höhendifferenz zum Füllstutzen und damit entscheidend die Fließgeschwindigkeit im Füllstutzen und letztendlich die Abfülleistung. Es kann z.B. bei empfindlichen oder stark schäumenden Flüssigkeiten das abzufüllende Volumen in den unteren Bereich der Dosierkammer gelegt werden, wodurch sich geringe Fließgeschwindigkeiten und dadurch eine geringe Schaumentwicklung bzw. eine schonende Abfüllung ergeben. Bei weniger empfindlichen Flüssigkeiten dagegen kann das abzufüllende Volumen in den oberen Bereich der Dosierkammer gelegt werden, wodurch hohe Strömungsgeschwindigkeiten und daher hohe Abfülleistungen möglich sind.

Mit einer Vorrichtung gemäß den Weiterbildungen der Erfindung in den Ansprüchen 37 bis 43 können in eine Flasche oder dgl. mehrere verschiedene Flüssigkeiten, z.B. Sirup einerseits und Mineralwasser andererseits, eingefüllt werden. Dadurch, daß auch der zusätzliche Vorratsbehälter an die Dosierkammer angeschlossen ist, wirkt diese zugleich als Mischbehälter. Es ergibt sich also bereits während des Füllens und Entleerens der Dosierkammer mit den verschiedenen Komponenten ein gutes Durchmischen. Unter Flüssigkeit im Sinne der Erfindung werden auch zähflüssige Medien bis hin zu Medien mit breiartiger Konsistenz verstanden, die auch kleine Festkörper wie z.B. Fruchtstücke enthalten können. Die erfindungsgemäße Vorrichtung erlaubt eine vollkommen neuartige Herstellung von Getränken, Lebensmittel oder dgl., wobei erst kurz vor dem Einfüllen in das Gefäß ein Vereinigen und Mischen der verschiedenen Komponenten durchgeführt wird.

Eine Vorrichtung gemäß den Weiterbildungen der Erfindung in den Ansprüchen 44 bis 59 kann sowohl als reiner Volumenfüller als auch als reiner Höhenfüller betrieben werden. Daneben sind verschiedene Kombinationen zwischen einer Volumen- und einer Höhenfüllung möglich. Die Vorrichtung kann daher praktisch alle denkbaren Einsatzfälle beim Füllen von Behältern abdecken und ermöglicht darüber hinaus völlig neue Füllverfahren.

Bei der im Anspruch 60 enthaltenen Weiterbildung der Erfindung mit mehreren Dosierkammern für jeden Füllstutzen ist eine einfache Änderung des Abfüllvolumens durch wahlweises Zuschalten einer oder mehrerer Dosierkammern möglich. Außerdem können auch größere Abfüllvolumen mit hoher Leistung gefahren werden, da während des Entleerens der ersten Dosierkammer in eine Flasche oder dgl. die zweite Dosierkammer gefüllt und dann anschließend in die Flasche entleert werden kann. Der allein für das Auffüllen der Dosierkammern erforderliche Umlaufwinkel des Rotors wird so stark reduziert.

Im Nachstehenden werden neun Ausführungsbeispiele der Erfindung anhand der Zeichnungen beschrieben. Es zeigen:
- Fig. 1 bis 5 und 7 bis 10: senkrechte Teilschnitte durch neun verschiedene Vorrichtungen zum portionsweisen Abfüllen von Flüssigkeiten
- Fig. 6: den Schnitt A B nach Fig. 5.

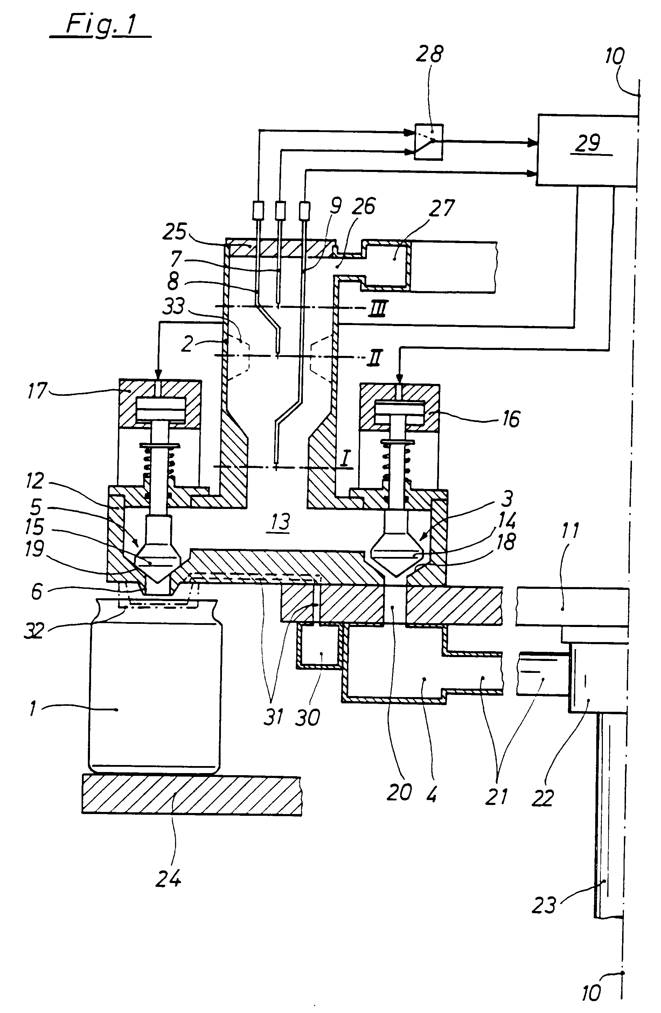

Die Vorrichtung nach Fig. 1 ist zum portionsweisen Abfüllen eines Getränks in kontinuierlich bewegte, dosenförmige Behälter 1 unter Atmosphärendruck eingerichtet. Sie weist einen um eine senkrechte Drehachse 10 umlaufenden Rotor 11 in Form einer Kreisscheibe auf. Am Umfang des Rotors 11 sind gleichmäßig verteilt mehrere Ventilblöcke 12 mit einem im wesentlichen radial verlaufenden Hohlraum 13 befestigt. An dessen innerem Ende ist ein Einlaßventil 3 und an dessen äußerem Ende ist ein Auslaßventil 5 vorgesehen. Die beiden Ventile weisen jeweils einen höhenbeweglichen Ventilkörper 14, 15 auf, der durch einen eigenen Stellmotor 16, 17 in Form eines Pneumatikzylinders angehoben oder abgesenkt werden kann. Die Ventilkörper 14, 15 wirken mit sich nach unten hin konisch verjüngenden Ventilsitzen 18, 19 im Ventilblock 12 zusammen und sind abgedichtet aus diesem herausgeführt. An den Ventilsitz 18 des Einlaufventils 3 schließt sich ein kurzer Kanal 20 an, der in einen ringförmigen Vorratsbehälter 4 für die abzufüllende Flüssigkeit einmündet. Dieser wird über mehrere radiale Leitungen 21, einen konzentrisch zur Drehachse 10 angeordneten Drehverteiler 22 und eine Steigleitung 23 mit dem Getränk versorgt. Die Zufuhr des Getränks erfolgt entweder über eine nicht gezeigte Pumpe und eine übliche Drucksteuerung oder über einen höher als der Ventilblock 12 ortsfest angeordneten, nicht gezeigten Vorlauftank.

An den Ventilsitz 19 des Auslaßventils 5 schließt sich ein Füllstutzen 6 in Form eines kurzen rohrartigen Ansatzes an. Dieser endet mit Abstand über dem oberen Rand eines zu befüllenden Behälters 1, so daß dieser ungehindert einem zusammen mit dem Rotor 11 umlaufenden Drehtisch 24 zugeführt werden kann, der den Behälter 1 zusammen mit dem zugehörigen Ventilblock 12 auf einer Kreisbogenbahn bewegt.

Mittig zwischen den beiden nach oben ragenden Stellmotoren 16, 17 ist an der Oberseite des Ventilblocks 12 eine zylindrische Dosierkammer 2 mit senkrechter Mittelachse angeordnet. Diese mündet mit ihrem verjüngten unteren Ein- und Auslauf direkt in den Hohlraum 13 ein und zwar an einer Stelle zwischen dem Auslaßventil 5 und dem Einlaßventil 3. Die Dosierkammer 2 besteht im wesentlichen aus einem rohrartigen Metallgefäß und ist an der Oberseite durch einen Deckel 25 dicht verschlossen. Unterhalb des Deckels 25 weist die Dosierkammer 2 eine seitliche Be- und Entlüftungsöffnung 26 auf, die mit einem Ringkanal 27, der auf dem Rotor 11 befestigt ist, in Verbindung steht. Im normalen Füllbetrieb ist der Ringkanal 27 über ein nicht gezeigtes Umschaltventil mit der Atmosphäre verbunden, so daß sich die Dosierkammer 2 ungehindert füllen und entleeren kann.

Im Deckel 25 sind drei den Füllstand in der Dosierkammer 2 überwachende Sensoren 7, 8, 9 in Form von elektrischen Stabsonden befestigt, die im wesentlichen senkrecht ins Innere der Dosierkammer 2 hineinragen. Jeder Sensor 7, 8 , 9 besteht aus einem isolierten Metalldraht, der an der untersten Spitze abisoliert ist. Der erste Sensor 7 liegt mittig in der Dosierkammer 2 und definiert mit seiner Meßstelle einen obersten Füllstand III, der etwas unterhalb der Öffnung 26 liegt. Dementsprechend ist das gesamte Volumen der Dosierkammer 2 größer als das maximal abzufüllende Flüssigkeitsvolumen einer Portion. Der zweite Sensor 8 verläuft teilweise neben dem ersten Sensor 7 und ist unterhalb diesem nach innen zur Mittelachse der Dosierkammer 2 hin gekröpft. Er definiert mit seiner Meßstelle einen tieferen Füllstand II. Der dritte Sensor 9 schließlich verläuft anfänglich neben den beiden ersten Sensoren 7, 8 und ist am Ende zur Mittelachse der Dosierkammer 2 hin gekröpft. Er endet im verjüngten Ein- bzw. Auslaufbereich der Dosierkammer 2 und definiert einen untersten Füllstand I. Dadurch, daß die Meßstellen aller drei Sensoren 7, 8, 9 in der Mittelachse der Dosierkammer 2 liegen, ergibt sich eine gleichmäßig hohe Meßgenauigkeit, unbeeinträchtigt von evtl. Schrägstellungen des Flüssigkeitsspiegels infolge der Rotation mit dem Rotor 11. Die beiden oberen Sensoren 7, 8 sind über einen Wahlschalter 28 mit einer elektronischen Steuereinrichtung 29 verbunden, die auf dem Rotor 11 befestigt ist, und an die auch die Sensoren aller anderen Meßkammern 2 angeschlossen sind. Mit dem Wahlschalter 28 kann das abzufüllende Flüssigkeitsvolumen auf einfachste Weise umgestellt werden. Dieses ergibt sich aus dem Volumen der Dosierkammer 2 zwischen dem untersten Füllstand I und dem oberen Füllstand II oder III des jeweils eingeschalteten Sensors 7 oder 8.

Gesteuert von der Steuereinrichtung 29 ergibt sich für die vorstehend beschriebene Vorrichtung folgender Funktionsablauf: Bei Betriebsbeginn und vor jedem Abfüllvorgang wird das Einlaßventil 3 geöffnet, indem durch den Stellmotor 16 der Ventilkörper 14 vom Ventilsitz 18 abgehoben wird (siehe Fig. 1). Die Flüssigkeit strömt unter dem Druck der nicht gezeigten Pumpe oder des nicht gezeigten Vorlaufbehälters über die Steigleitung 23, den Drehverteiler 22, die Leitungen 21, den ringförmigen Vorratsbehälter 4, den Kanal 20 und den Hohlraum 13 von unten her in die Dosierkammer 2 ein, wobei die verdrängte Luft über die Öffnung 26 entweicht. Ist der obere Sensor 7 zugeschaltet, so strömt die Flüssigkeit so lange zu, bis sie den obersten Füllstand III erreicht und die Meßstelle der Sonde 7 kontaktiert. Dabei fließt elektrischer Strom von dem unter Spannung stehenden Sensor 7 durch die Flüssigkeit zu der an Masse gelegten metallischen Dosierkammer 2. Dieses elektrische Signal wird von der Steuereinrichtung 29 erfaßt und diese löst ein sofortiges Schließen des Einlaßventils 3 durch Absenken des Ventilkörpers 14 aus. Während des vorbeschriebenen Füllens der Dosierkammer 2 ist das Auslaßventil 5 andauernd geschlossen.

Wird nun durch einen nicht gezeigten Fühler angezeigt, daß unter dem Füllstutzen 6 ein leerer Behälter 1 vorhanden ist, so wird durch die Steuereinrichtung 29 ein Öffnen des Auslaßventils 5 durch Anheben des Ventilkörpers 15 mittels des Stellmotors 17 ausgelöst. Das Einlaßventil 3 bleibt geschlossen. Die Flüssigkeit läuft dann allein unter geodätischem Druck aus der Dosierkammer 2 über den Hohlraum 13 und den Füllstutzen 6 in den Behälter 1 ein, bis der unterste Füllstand I erreicht ist, wobei der Stromfluß zwischen dem unteren Sensor 9 und der Dosierkammer 2 unterbrochen wird. Dieses Signal wird von der Steuereinrichtung 29 erfaßt und diese löst ein sofortiges Schließen des Auslaßventils 5 durch Absenken des Ventilkörpers 15 mittels des Stellmotors 17 aus. Der gesamte Hohlraum 13 und der untere Bereich der Dosierkammer 2 bis hin zum Füllstand I bleiben somit immer mit Flüssigkeit gefüllt. Andererseits ist in den Behälter 1 exakt das definierte Volumen zwischen dem unteren Füllstand I und dem obersten Füllstand III eingelaufen. Dabei sorgt der restliche Druck der verbleibenden Flüssigkeitssäule dafür, daß auch am Ende des Füllvorgangs noch definierte Strömungsverhältnisse vorliegen und ggf. ein Aufschäumen der Flüssigkeit vermieden wird. Sofort nach dem Schließen des Auslaßventils 5 kann in der vorbeschriebenen Weise durch gesteuertes Öffnen des Einlaßventils 3 die Dosierkammer 2 wieder bis zum obersten Füllstand III mit Flüssigkeit gefüllt werden. Da die Dosierkammer 2 im unteren Bereich bereits gefüllt ist, wird auch bei Beginn des Nachfüllvorgangs ein Aufschäumen oder Verwirbeln der Flüssigkeit vermieden.

In entsprechender Weise verläuft der Füllvorgang, wenn durch den Wahlschalter 28 anstelle des oberen Sensors 7 der mittlere Sensor 8 eingeschaltet ist. In diesem Falle wird bei jedem Nachfüllvorgang die Dosierkammer 2 bis zum mittleren Füllstand II gefüllt und es läuft in jeden Behälter 1 das definierte Volumen zwischen dem untersten Füllstand I und dem mittleren Füllstand II ein.

Um ein Reinigen der gesamten Vorrichtung im Umlaufverfahren zu ermöglichen, kann der Ringkanal 27 über das nicht gezeigte Umschaltventil mit einer üblichen CIP-Anlage verbunden werden, an die auch die Steigleitung 23 anzuschließen ist. Bei geöffnetem Einlaßventil 3 kann dann die gesamte Vorrichtung einschließlich der Dosierkammer 2 mit einem flüssigen Reinigungsmittel gespült werden. Damit auch der Füllstutzen 6 sowie der Ventilsitz 19 und der Ventilkegel 15 des Auslaßventils 5 vollständig in den Reinigungskreislauf einbezogen werden können, ist am Rotor 11 ein weiterer Ringkanal 30 befestigt, der über nicht gezeigte Leitungen, Drehverteiler, Umschaltventile usw. an die CIP-Anlage anschließbar ist. An den Ringkanal 30 sind Kanäle 31 angeschlossen, die durch den jeweiligen Ventilblock 12 hindurchgehen und an dessen Unterseite nahe dem Füllstutzen 6 ins Freie münden. Wird an der Unterseite des Ventilblocks 12 eine den Füllstutzen 6 und die Auslaßöffnung des Kanals 31 mit Abstand umgebende Spülkappe 32 flüssigkeitsdicht befestigt, so kann bei geöffnetem Auslaßventil 5 die aus dem Füllstutzen 6 austretende Reinigungsflüssigkeit im Ringkanal 30 gesammelt und so im System gehalten werden.

Um die volumetrische Dosiergenauigkeit unter Verwendung einfachster Sensoren zu verbessern, kann die Dosierkammer 2 im Bereich der Meßstellen der Sensoren mit ringartigen Einschnürungen bzw. Querschnittsverengungen 33 versehen werden, wie in Fig. 1 im Bereich der Meßstelle des mittleren Sensors 8 strichliert angedeutet ist.

Anstelle von einzelnen Sensoren 7, 8, 9 für die unterschiedlichen Füllstände I, II, III kann auch ein einziger Sensor mit mehreren Meßstellen oder ein Sensor mit einer länglichen Meßstelle eingesetzt werden, wobei durch elektrische Schaltelemente eine einfache stufenweise bzw. stufenlose Einstellung der gewünschten Füllstände möglich ist. Auch können die Sensoren einzeln oder gemeinsam höhenverstellbar in den Dosierkammern 2 der Vorrichtung angeordnet werden, wodurch gleichfalls eine einfache Verstellung des Dosiervolumens möglich ist. Wichtig ist, daß in jedem Falle die vorbestimmten Füllstände unterhalb des maximal möglichen Füllstands in der Dosierkammer 2 liegen, wie er durch den unteren Rand der Entlüftungsöffnung 26 definiert ist. Flüssigkeitsverluste durch diese Öffnung werden so vermieden.

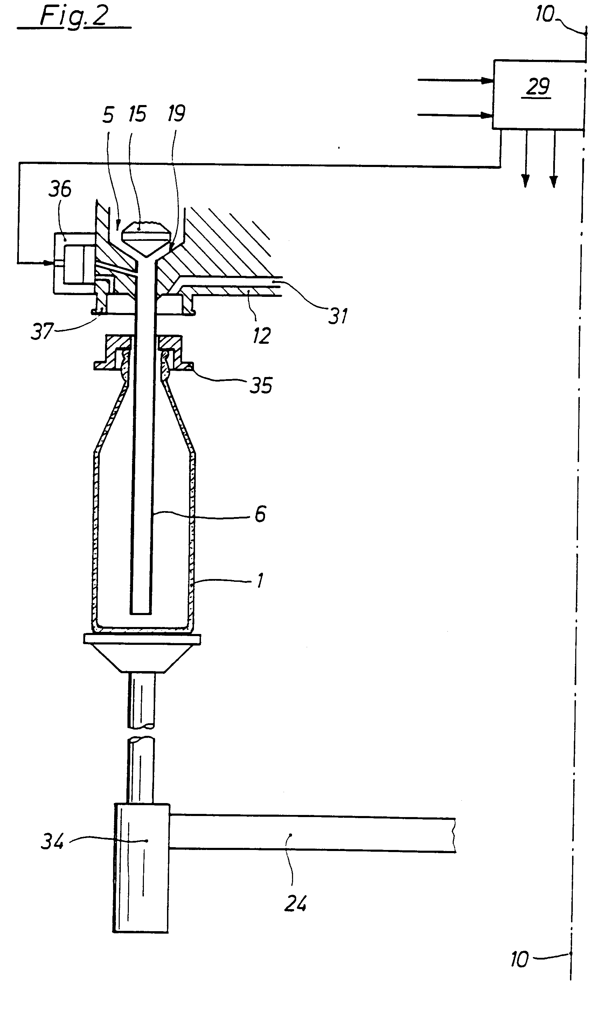

Die Vorrichtung nach Fig. 2 unterscheidet sich von der Vorrichtung nach Fig. 1 dadurch, daß der Füllstutzen 6 als langes Füllrohr ausgebildet ist. Hierdurch können Behälter 1 in Form von Flaschen unterschichtend gefüllt werden. Dementsprechend ist der Drehtisch 24 mit Huborganen 34 ausgestattet, durch welche die Behälter 1 über die Füllstutzen 6 gehoben werden. Dabei wird die Behältermündung in der üblichen Weise durch höhenbewegliche Zentrierglocken 35 exakt geführt. In der obersten Stellung der Huborgane 34 bzw. der Behälter 1 verbleibt zwischen der Unterseite des Ventilblocks 12 und der Zentrierglocke 35 ein Ringspalt, durch den die während des Einlaufens der Flüssigkeit aus den Behältern 1 verdrängte Luft entweichen kann. An der Unterseite des Ventilblocks 12 ist ein ringartiger Ansatz 37 ausgebildet, der zur Halterung der nicht gezeigten Spülglocken dient. Ferner ist seitlich am Ventilblock 12 ein durch die Steuereinheit 29 betätigbares Pneumatikventil 36 angeordnet, das durch Kanäle im Ventilblock 12 einerseits mit dem Füllstutzen 6 dicht unterhalb des Ventilsitzes 19 und andererseits mit der Atmosphäre verbunden ist. Wird das normalerweise geschlossene Steuerventil 36 durch die Steuereinrichtung 29 am Ende eines Füllvorgangs kurz geöffnet, so kann die im Füllstutzen 6 enthaltene Flüssigkeit bei geschlossenem Auslaufventil 5 in den Behälter 1 auslaufen.

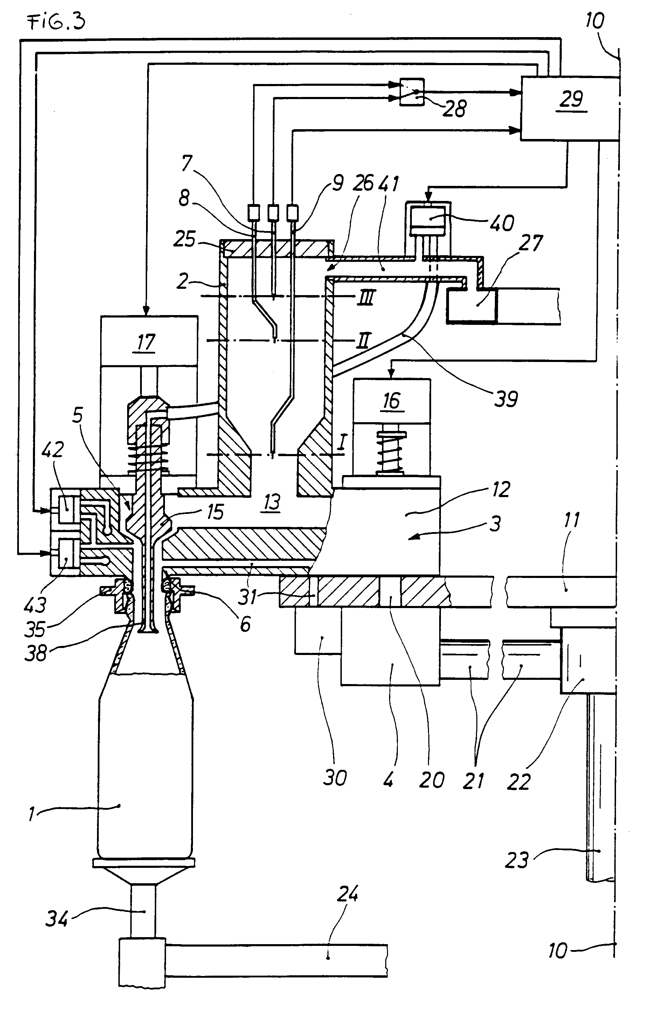

Während die Vorrichtungen nach den Fig. 1 und 2 zum Füllen unter Atmosphärendruck eingerichtet sind, arbeitet die Vorrichtung nach Fig. 3 mit überatmosphärischem Gegendruck, wie es beim Abfüllen von CO₂-haltigen Getränken angebracht ist. Die Vorrichtung nach Fig. 3 stimmt insbesondere hinsichtlich der Ausbildung der Meßkammer 2 mit den drei Sensoren 7, 8, 9, des Einlaßventils 3 und der Zuführung der Füllflüssigkeit mit der Vorrichtung nach Fig. 1 überein. Im Nachstehenden werden daher nur die Abweichungen beschrieben.

Der Ventilkörper 15 des Auslaßventils 5 weist eine zentrale Längsbohrung auf und ist am unteren Ende mit einer rohrartigen Verlängerung 38 versehen. Diese ragt nach unten hin etwas aus dem kurzen Füllstutzen 6 heraus und ist am Ende mit einem konischen Abweiser für die Flüssigkeit versehen. Über die Bohrung im Ventilkörper 15 und eine an deren oberem Ende angeschlossene flexible Leitung 39 steht die als Rückgasrohr wirkende Verlängerung 38 mit einem pneumatischen Steuerventil 40 in Verbindung. Dieses ist andererseits an den Verbindungskanal 41 zwischen der Öffnung 26 am oberen Ende der Dosierkammer 2 und dem Ringkanal 27 angeschlossen. Dieser ist mit Spanngas gefüllt, das unter Überdruck steht. Die Zuführung und Regelung des Spanngases erfolgt in üblicher Weise über nicht gezeigte Leitungen, Drehverteiler, Regelventile und dgl. Das Steuerventil 40 wird von der gemeinsamen elektronischen Steuereinrichtung 29 betätigt. Ist es geöffnet, so steht die Verlängerung 38 mit dem Spanngas-Ringkanal 27 in Verbindung. Als Spanngas wird je nach der abzufüllenden Flüssigkeit z.B. CO₂, Luft oder ein Gemisch dieser beiden Gase eingesetzt.

An der Außenseite des Ventilblocks 12 sind zwei weitere pneumatische Steuerventile 42 und 43 angeordnet, die wiederum von der gemeinsamen elektronischen Steuereinrichtung 29 betätigt werden. Diese beiden Steuerventile 42, 43 sind über einen verzweigten Kanal mit dem Auslaufstutzen 6 verbunden. Außerdem ist eines der beiden Steuerventile über eine Drosseldüse mit der Atmosphäre und das andere Steuerventil mit einem reines CO₂ enthaltenden Ringkanal verbunden. Die entsprechenden Verbindungen und Kanäle sind nicht dargestellt.

Im Betrieb ist bei der Vorrichtung nach Fig. 3 die als Druckbehälter gestaltete Dosierkammer 2 über den Ringkanal 27, die Verbindungsleitung 41 und die Öffnung 26 andauernd mit Spanngas gefüllt. Dessen Druck ist geringfügig kleiner als der Flüssigkeitsdruck im Vorratsbehälter 4, so daß die Flüssigkeit bei geöffnetem Einlaßventil 3 in die Dosierkammer 2 einströmen kann. Ansonsten läuft das durch die Sensoren 7, 8, 9 gesteuerte abwechselnde Füllen und Entleeren der Dosierkammer 2 in gleicher Weise ab wie bei der Vorrichtung nach Fig. 1, wobei sich das Spanngaspolster über dem Füllspiegel entsprechend vergrößert und verkleinert.

Vor dem Füllen wird der flaschenförmige Behälter 1 durch das Huborgan 34, geführt durch die höhenbewegliche Zentrierglocke 35, über die Verlängerung 8 geschoben und fest an den Füllstutzen 6 angepreßt, so daß er flüssigkeits- und gasdicht mit diesem verbunden ist. Dann wird, ausgelöst durch die Steuereinrichtung 29, das Steuerventil 40 geöffnet, wonach so lange Spanngas aus dem Ringkanal 27 über die flexible Leitung 39 und die Verlängerung 38 in den Behälter 1 einströmt, bis Druckausgleich zwischen dem Behälter 1 und dem Ringkanal 27 sowie der Dosierkammer 2 vorliegt. Erst danach wird das Auslaßventil 3 durch die Steuereinrichtung 29 zwangsweise geöffnet oder es erfolgt eine selbsttätige Öffnung in der bei Gegendruckfüllmaschinen üblichen Weise mittels einer Feder. Während des Einlaufens der Flüssigkeit strömt das Spanngas aus dem Behälter 1 über die Verlängerung 38 zurück in die Dosierkammer 2 bzw. den Ringkanal 27. Nach dem sensorgesteuerten Entleeren der Dosierkammer 2 in den Behälter 1 über den Füllstutzen 6 wird das Auslaßventil 5 zwangsläufig geschlossen. Danach wird über eines der beiden Steuerventile 42, 43 der Behälter über die Drosseldüse mit der Atmosphäre verbunden, so daß sich der Druck allmählich abbauen kann. Danach wird der gefüllte und entspannte Behälter 1 durch Absenken des Huborgans 34 vom Füllstutzen 6 und der Verlängerung 38 abgezogen.

Um ein sauerstoffarmes Abfüllen zu ermöglichen, kann vor dem Einleiten von Spanngas über die Verlängerung 38 und das Steuerventil 40 mit Hilfe des anderen Steuerventils 42, 43 bei noch nicht vollständig an den Füllstutzen 6 angehobenem Behälter 1 das Behälterinnere mit reinem CO₂ gespült werden. In ähnlicher Weise ist durch das entsprechende Steuerventil 42, 43 bei bereits vollständig angepreßtem Behälter 1 ein Vorevakuieren möglich, indem das Behälterinnere mit einer Vakuumpumpe verbunden wird. Auch ein Sterilisieren des Behälterinneren mittels Dampf ist bei Anbringung weiterer Steuerventile und Ringkanäle möglich.

Der aufgrund der sensorgesteuerten Füllung und Entleerung mögliche Aufbau der Dosierkammer 2 als einfacher Druckbehälter mit einem die Flüssigkeit bedeckenden Spanngaspolster ermöglicht einerseits eine exakte volumetrische Dosierung und andererseits die Durchführung aller beim Füllen unter Gegendruck üblichen Verfahrensabläufe.

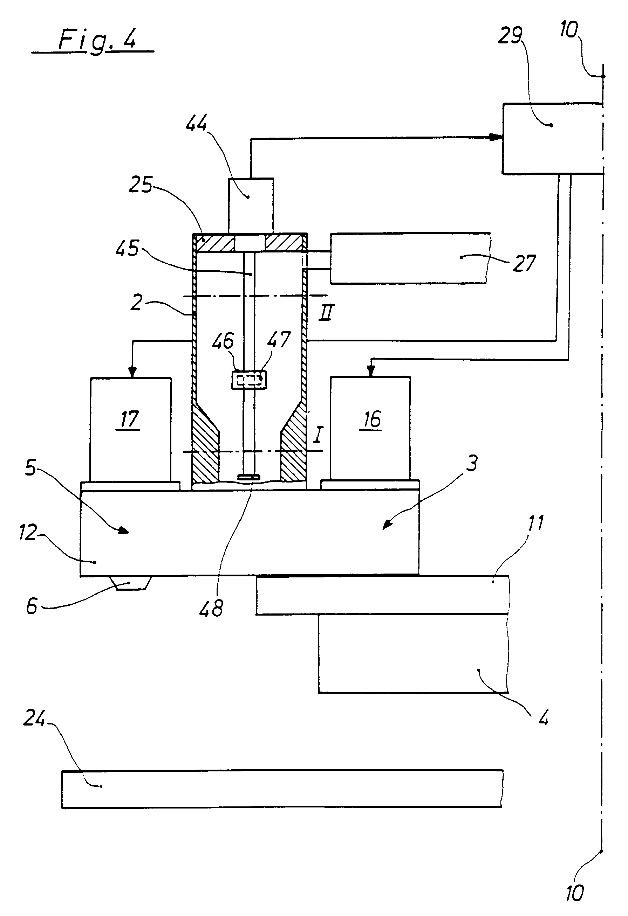

Bei der Vorrichtung nach Fig. 4 ist im Deckel 25 der zylindrischen Dosierkammer 2 ein einziger Sensor in Form einer Schwimmersonde 44 befestigt. Diese weist einen stabförmigen, z.B. auf induktiver Basis arbeitenden Wegaufnehmer 45 mit kreisförmigem Querschnitt auf, der konzentrisch zur Mittelachse der Dosierkammer 2 in dieser angeordnet ist. Auf dem Wegaufnehmer 45 ist ein ringförmiger Schwimmer 46 frei beweglich geführt, dessen unterste Position durch einen scheibenförmigen Anschlag 46 am unteren Ende des Wegaufnehmers 45 definiert ist. Im Schwimmer 46 ist ein magnetisches Schaltstück 47 befestigt, das mit dem Wegaufnehmer 45 zusammenwirkt. Die Schwimmersonde 44 liefert ein Meßsignal, z.B.in Form einer elektrischen Spannung, das proportional zur Stellung des Schwimmers 47 bezüglich des Wegaufnehmers 45 und damit zur Füllhöhe in der Dosierkammer 2 ist.

Der Wegaufnehmer 45 der Schwimmersonde 44 und damit deren längliche Meßzone bestreicht die gesamte Höhe der Dosierkammer 2, vom Deckel 25 bis zum verengten Auslaufbereich am unteren Ende. In einer an die Schwimmersonde 44 angeschlossenen elektronischen Steuereinrichtung 29 sind z.B. mittels verstellbarer Schwellwertgeber zwei Schaltpunkte definiert, mit denen das Meßsignal der Schwimmersonde 44 laufend verglichen wird. Bei Ansteigen der Flüssigkeit in der Dosierkammer 2 auf einen oberen Füllstand II wird ein Steuersignal erzeugt, das ein Schließen des Einlaßventils 3 über den Stellmotor 16 auslöst. Bei Abfallen der Flüssigkeit in der Dosierkammer 2 auf einen unteren Füllstand I wird ein anderes Steuersignal erzeugt, das mittels des Stellmotors 17 ein Schließen des Auslaßventils 5 auslöst. Die Höhe der beiden Füllstände I und II und damit das abzufüllende Volumen der Flüssigkeit kann auf einfache Weise durch Verstellen der Schwellwertgeber stufenlos und schnell verändert werden. Dabei verbleibt immer eine Mindestmenge an Flüssigkeit bis zum Füllstand I in der Dosierkammer 2.

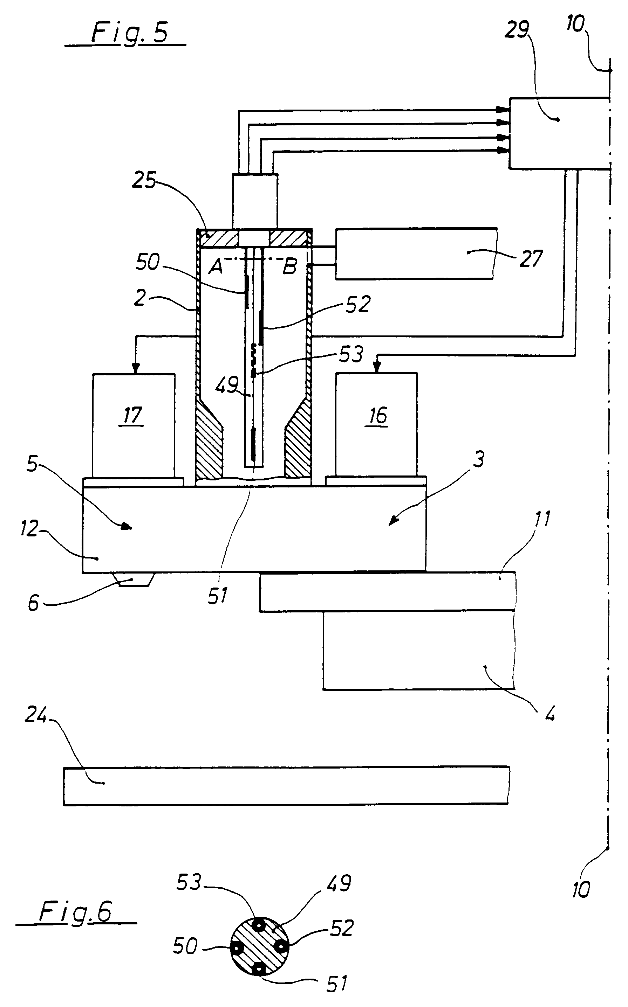

Bei der Vorrichtung nach Fig. 5 und 6 ist im Deckel 25 der zylindrischen Dosierkammer 2 ein zylindrischer Trägerstab 49 aus isolierendem Kunststoff befestigt und zwar konzentrisch zur Mittelachse der Dosierkammer 2. Der Trägerstab 49 ist gleichmäßig über den Umfang verteilt mit vier parallelen Längsnuten versehen, in denen vier Sensoren 50, 51, 52, 53 befestigt sind. Jeder dieser Sensoren besteht im wesentlichen aus einem isolierten Draht aus rostfreiem Stahl, der an seinem unteren Ende ein Stück abisoliert ist, z.B. über eine Länge von 40 mm. Diese isolierten Enden der Sensoren 50 bis 53 bilden längliche Meßzonen, die wie Fig. 5 zeigt, auf verschiedenen Höhen bzw. Füllstandsbereichen in der Dosierkammer 2 angeordnet sind.

Jeder Sensor 50 bis 53 ist über eine eigene Leitung an eine elektronische Steuereinrichtung 29 angeschlossen, wo mittels Wahlschaltern die jeweils aktiven Sensoren für die Steuerung des Einlaßventils 3 und des Auslaßventils 5 ausgewählt werden können. Außerdem ist durch einstellbare Schwellwertgeber der exakte Schaltpunkt jedes Sensors 50 bis 53 im Bereich der länglichen Meßzone einstellbar. Dabei arbeitet jeder Sensor 50 bis 53 als elektrischer Leitfähigkeitsmesser zusammen mit der an Masse gelegten, aus elektrisch leitendem Material bestehenden Dosierkammer 2, und liefert ein im wesentlichen proportional zum Füllstand im Bereich der Meßzone verlaufendes Meßsignal.

Es können auch andere Ausführungen von Sensoren realisiert werden. So kann z.B. im Deckel der Dosierkammer eine auf den Flüssigkeitsspiegel gerichtete Sender-Empfänger-Anordnung für elektromagnetische Wellen angeordnet werden. Auch kann bei einem Sensor mit einer punktartigen Meßstelle eine längliche Meßzone durch eine variable Verzögerungszeit zwischen dem Ansprechen des Sensors und der Betätigung des entsprechenden Steuerventils nachgebildet werden. Ferner kann der Sensor bei geeignetem Meßprinzip außerhalb der Dosierkammer an geschützter stelle angeordnet werden.

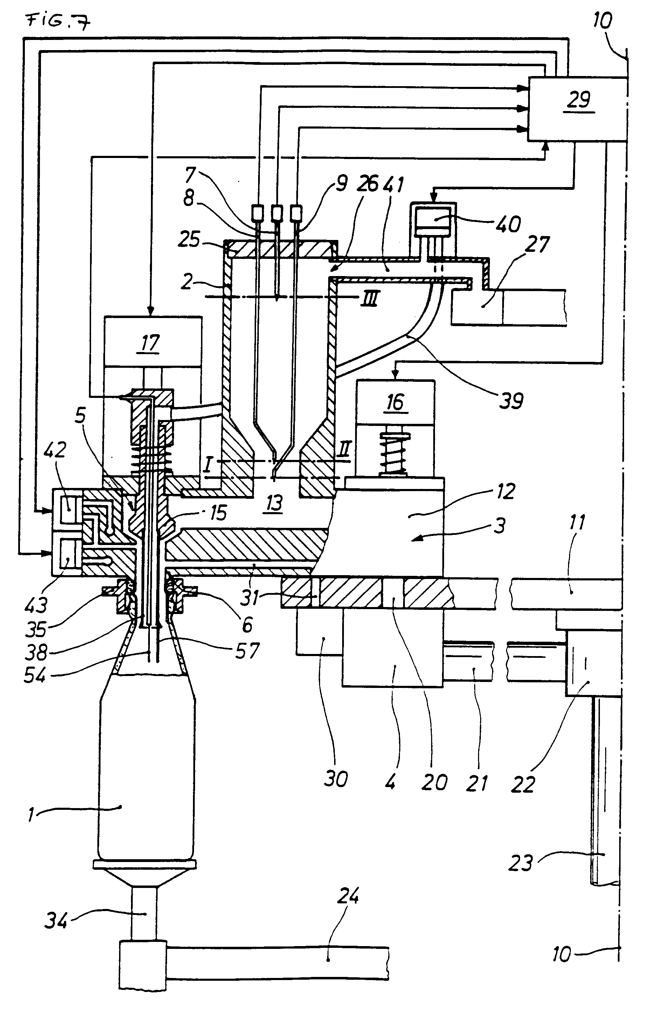

Die Vorrichtung zum Füllen von flaschenförmigen Behältern 1 nach Fig. 7 entspricht weitgehend der Vorrichtung nach Fig. 3. Zusätzlich ist im Ventilkörper 15 des Auslaßventils 5 bzw. dessen rohrartiger Verlängerung 38 konzentrisch zur Mittelachse ein auf die Füllhöhe in einem Behälter 1 ansprechender Sensor 54 in Form einer Füllstandsonde angeordnet. Diese besteht im wesentlichen aus einem Draht aus rostfreiem Stahl, der mit Ausnahme eines Bereichs am unteren Ende durchgehend isoliert ist. Der nicht isolierte Bereich bildet eine längliche Meßzone, die in Abhängigkeit von der Eintauchtiefe in die Flüssigkeit im Behälter 1 ein Meßsignal liefert. Dabei dient ein zungenartiger Ansatz 57 der metallischen Verlängerung 38 als Gegenelektrode. Der Sensor 54 ist am oberen Ende gasdicht aus dem Ventilkörper 15 herausgeführt und über eine elektrische Sondenleitung an die elektronische Steuereinrichtung 29 angeschlossen. Der Steuereinrichtung 29 steht daher bei eingeschaltetem Sensor 54 eine Information über die momentane Füllhöhe im Behälter 1 im Bereich der länglichen Meßzone zur Verfügung.

Der oberste Sensor 7 in der Dosierkammer 2 legt deren maximalen Füllstand III fest. Bei einem entsprechenden Anstieg der Flüssigkeit schaltet er in jedem Falle, unabhängig vom weiteren Ablauf des Füllvorgangs, das Einlaßventil 3 zu. Der unterste Sensor 9 in der Dosierkammer 2 legt deren minimalen Füllstand I fest. Zusammen mit dem obersten Sensor 7 definiert er ein maximales Füllvolumen, das bei einem Behälter 1 mit 0,5 Liter Nenninhalt beispielsweise 505 Milliliter beträgt. Der mittlere Sensor 8 liegt auf einem etwas höheren Füllstand II als der untere Sensor 9 und definiert zusammen mit dem oberen Sensor 7 ein minimales Füllvolumen, das bei einem Behälter 1 mit 0,5 Liter Nenninhalt beispielsweise 495 Milliliter beträgt. Die drei Sensoren 7, 8, 9 sind direkt an die elektronische Steuereinrichtung 29 angeschlossen.

Mit der vorbeschriebenen Vorrichtung ist folgender Ablauf eines Füllvorgangs in Form einer kombinierten Volumen-Höhen-Füllung durchführbar:

Als erstes wird bei geschlossenem Auslaßventil 5 das Einlaßventil 3 geöffnet, so daß aus dem Vorratsbehälter 4 Flüssigkeit in die Dosierkammer 2 einfließen kann. Sobald der oberste Füllstand III erreicht ist, spricht der Sensor 7 an und das Einlaßventil 3 wird geschlossen. Wenn der Behälter 1, geführt von der Zentrierglocke 35, durch das Huborgan 34 gasdicht an den Füllstutzen 6 angepreßt und durch Öffnen des Steuerventils 40 aus dem Ringkanal 27 vorgespannt worden ist, wird das Auslaßventil 5 geöffnet und die Flüssigkeit strömt über den Füllstutzen 6 aufgrund des geodätischen Drucks anfangs schneller und dann langsamer in den Behälter 1 ein.

Der Flüssigkeitseinlauf wird auf jeden Fall so lange fortgesetzt, bis der Flüssigkeitsspiegel in der Dosierkammer 2 bis zum Füllstand II abgesunken ist und somit der mittlere Sensor 8 anspricht. Hat der auf einen mittleren, durchschnittlichen Füllstand, wie er sich beispielsweise beim Füllen eines idealen Behälters 1 mit exaktem Nenninhalt ergibt, eingestellte Sensor 54 vorher schon angesprochen, so wird jetzt das Auslaßventil sofort geschlossen. Der Sensor 8 arbeitet insofern vorrangig gegenüber dem Sensor 54.

Hat bei Erreichen des Füllstands II in der Dosierkammer 2 der Sensor 54 noch nicht angesprochen, so bleibt das Auslaßventil 5 geöffnet, bis der Sensor 54 das Erreichen des gewünschten Füllstands meldet. Nunmehr wird das Auslaßventil 5 sofort geschlossen. Dies erfolgt allerdings nur, sofern der Flüssigkeitsspiegel in der Dosierkammer 2 bei Ansprechen des Sensors 54 noch überhalb des untersten Füllstands I steht. Ist dies nicht der Fall, d.h., spricht der untere Sensor 9 in der Dosierkammer 2 zuerst an, so wird das Auslaßventil 5 geschlossen, ohne daß die mittlere Füllhöhe im Behälter 1 erreicht worden ist.

Die vorbeschriebene Füllvorrichtung nach Fig. 7 ermöglicht somit in idealer Weise die Erfüllung aller Forderungen, wie sie z.B. beim Abfüllen von Erfrischungsgetränken in eine Flaschensorte mit der üblichen Maßhaltigkeit auftreten. Es wird sichergestellt, daß auch relativ "kleine" Flaschen die erforderliche Mindestfüllmenge enthalten, es wird verhindert, daß relativ "große" Flaschen zu stark überfüllt werden, und es wird eine gute Gleichmäßigkeit bezüglich des Füllstands der gefüllten Flaschen erzielt, so daß unberechtigte Reklamationen seitens der Verbraucher vermieden werden und innerhalb der Abfüllanlage eine Überwachung der Füllhöhe mit den normalen Kontrolleinrichtungen möglich ist.

Eine kombinierte Volumen-Höhen-Füllung ist auch mit nur einem Sensor 8 oder 9 im unteren Bereich der Dosierkammer 2 möglich. Dabei können die Sensoren wie im vorstehenden beschrieben jeweils vorrangig gegenüber dem Sensor 54 für den Füllstand im Behälter 1 geschaltet sein. Auch ist es möglich, einen Sensor in der Dosierkammer 2 exakt auf das Nennvolumen einzustellen.

Weiter ist es möglich, den Sensor 54 für den Füllstand im Behälter 1 vorrangig gegenüber dem Sensor oder den Sensoren in der Dosierkammer 2 zu schalten, z.B. wenn im Kopf des Behälters 1 ein bestimmter Mindestfreiraum zwecks Ausdehnung der Getränke oder zur Verringerung der Berstgefahr bei der Abfüllung von CO₂-haltigen Getränken erwünscht ist.

Ferner kann die Vorrichtung nach Fig. 7 auch als reiner Volumenfüller betrieben werden, indem der Sensor 54 einfach abgeschaltet wird.

Auch ein Betrieb als reiner Höhenfüller ist möglich. Hierzu wird das Volumen zwischen dem oberen Sensor 7 und dem unteren Sensor 9 in der Dosierkammer 2 auf einen Wert eingestellt, der größer ist als das maximale Füllvolumen. Der Flüssigkeitseinlauf wird dann in jedem Falle durch den Sensor 54 im Behälter 2 beendet, durch den außerdem im Bereich der länglichen Meßzone die Füllhöhe beliebig variiert werden kann. Der untere Sensor 9 in der Dosierkammer 2 wirkt in diesem Falle als reine Sicherheitseinrichtung, indem er z.B. beim Bruch eines Behälters 1 ein vollständiges Leerlaufen der Dosierkammer 2 verhindert. Der Vorzug eines derartigen Höhenfüllers gegenüber den bekannten Höhenfüllern, bei denen der Füllstutzen 6 direkt aus dem Vorratsbehälter 4 beschickt wird, besteht darin, daß durch die definierten Höhenverhältnisse in der Dosierkammer 2 eine exakt reproduzierbare Einstellung der Füllgeschwindigkeit mit automatischer Reduzierung gegen Füllende erzielbar ist. Dies führt auch bei schwierigen Getränken zu einem ruhigen, genauen Füllen mit geringer Blasenbildung.

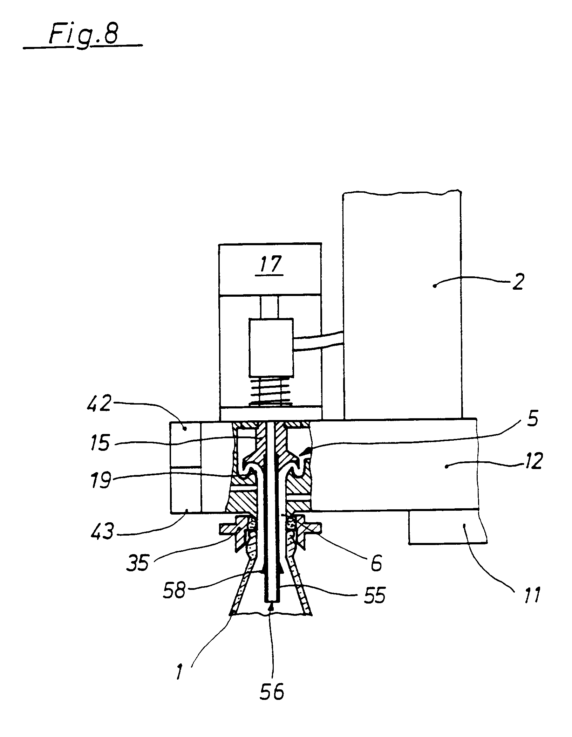

Die nur teilweise dargestellte Vorrichtung nach Fig. 8 entspricht wiederum weitgehend der Vorrichtung nach Fig. 3. Jedoch ist hier am Ventilkörper 15 des Auslaßventils 5 anstelle einer Verlängerung ein Rückgasrohr 55 austauschbar befestigt. Dieses weist einen Abweisschirm 58 für die einlaufende Flüssigkeit und am unteren Ende einen axialen Anschnitt 56 auf, der die maximale Füllhöhe definiert. Ist die Flüssigkeit im Behälter 1 bis zum Anschnitt 56 angestiegen, so kann kein Spanngas mehr aus dem Behälter 1 entweichen und der Flüssigkeitseinlauf wird automatisch gestoppt. Um einen unkontrollierten Nachlauf zu verhindern, ist zwischen dem Ventilkörper 15 und seinem Ventilsitz 19 im Ventilblock 12 ein herkömmliches Siphon ausgebildet, das ein Entweichen von Spanngas aus dem Behälter 1 nach oben hin verhindert.

Die durch das Rückgasrohr 55 gebildete, auf den Füllstand im Behälter 1 ansprechende Einrichtung wird z.B. mit einem ein bestimmtes Füllvolumen in der Dosierkammer 2 definierenden unteren Sensor kombiniert. Dabei verhindert das vorrangig wirkende Rückgasrohr 55 ein Überfüllen der Behälter 1 und sichert einen ausreichenden freien Kopfraum.

Auch bei der vorbeschriebenen Vorrichtung nach Fig. 8 ist eine reine Höhenfüllung möglich, wobei die Füllhöhe durch Austauschen des Rückgasrohres 55 geändert werden kann. Alternativ ist wiederum eine reine Volumenfüllung durchführbar, wobei das Rückgasrohr 55 durch vollständiges Entfernen oder durch Austausch gegen ein entsprechend kurzes, direkt unterhalb des Abweisschirms 58 endendes Rückgasrohr "ausgeschaltet" wird.

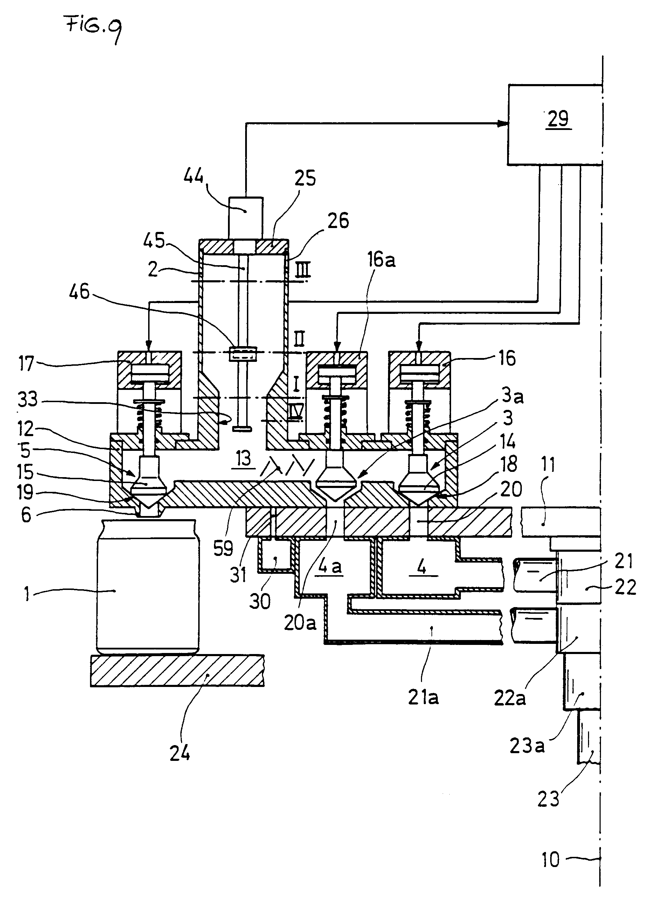

Die Vorrichtung nach Fig. 9 stimmt im Grundaufbau zum großen Teil mit der Vorrichtung nach Fig. 1 und hinsichtlich des Aufbaus des Sensors 44 in der Dosierkammer 2 vollständig mit der Ausführung gemäß Fig. 4 überein. Im Nachstehenden werden daher nur die Abweichungen und zusätzlichen Merkmale beschrieben.

Der Ventilblock 12 einschließlich seines Hohlraums 13 ist an der zur Drehachse 10 weisenden Seite verlängert. In dem so gewonnenen Raum ist an der Oberseite des Ventilblocks 12 ein zusätzlicher Stellmotor 16a befestigt und an seiner Unterseite ein zusätzlicher Einlaß in Form eines Kanals 20a ausgebildet. Der Stellmotor 16a betätigt ein zusätzliches Einlaßventil 3a von gleichem Aufbau wie das Einlaßventil 3, durch das der genauso wie der Kanal 20 in den Hohlraum 13 einmündende zusätzliche Kanal 20a wahlweise verschlossen oder freigegeben werden kann.

Der zusätzliche Kanal 20a ist an einen zusätzlichen ringförmigen Vorratsbehälter 4a angeschlossen, der über mehrere radiale Leitungen 21a, einen konzentrisch zur Drehachse 10 angeordneten Drehverteiler 22a und eine Steigleitung 23a mit der abzufüllenden Flüssigkeit oder Komponente versorgt wird. Die Versorgung erfolgt z.B. über eine nicht gezeigte Pumpe oder einen nicht gezeigten Vorlauftank, der höher liegt als die Dosierkammer 2. Ferner ist im Bereich zwischen den Einmündungen des zusätzlichen Kanals 20a und der Dosierkammer 2 im Hohlraum 13 ein statischer Mischer 59 befestigt.

Enthält der Vorratsbehälter 4 ein fertiges Getränk oder anderes Produkt, so kann der Füllvorgang in gleicher Weise ablaufen, wie dies anhand der Fig. 1 beschrieben ist. Dabei steuert die Steuereinrichtung 29 mittels des Einlaßventils 3 das Füllen der Dosierkammer 2 aus dem Vorratsbehälter 4 bis zum oberen Füllstand III und mittels des Auslaßventils 5 das Entleeren der Dosierkammer 2 bis zum unteren Füllstand I und damit gleichzeitig das Füllen der Dose 1. Enthält auch der zusätzliche Vorratstank 4a ein fertiges Produkt, so kann dieses wahlweise in entsprechender Weise portionsweise abgefüllt werden, wobei das Füllen der Dosierkammer 2 durch das zusätzliche Einlaßventil 3a bei dauerhaft geschlossenem Einlaßventil 3 gesteuert wird.

Darüber hinaus kann mit der Vorrichtung nach Fig. 9 ein Produkt aus zwei verschiedenen Komponenten zubereitet und abgefüllt werden. Hierzu wird in den Vorratsbehälter 4 eine erste Komponente, z.B. Wasser, und in den zusätzlichen Vorratsbehälter 4a eine zweite Komponente, z.B. Sirup, eingeführt. Soll die Vorrichtung zwischen zwei Füllvorgängen bis zur unteren Höhe I gefüllt bleiben, also nicht vollständig leerlaufen, so ist vor der ersten Abfüllung bis zur Höhe I das fertige Produkt einzufüllen. Dies kann manuell oder automatisch mit Hilfe der Steuereinrichtung 29 erfolgen. Hierbei wird zuerst durch Öffnen des Einlaßventils 3 Wasser bis zur Höhe IV eingeleitet und dann durch Öffnen des zusätzlichen Einlaßventils 3a bei geschlossenem Einlaßventil 3 Sirup bis zum Erreichen der Füllhöhe I. Statt dessen kann auch durch entsprechende zusätzliche Schaltpunkte des Sensors 44 eine übergroße erste Charge zubereitet werden, bei der das Volumen des Hohlraums 13 entsprechend berücksichtigt ist. Nach dieser Vorbereitung kann mit dem eigentlichen Mischen und Füllen begonnen werden.

Hierbei wird als erstes durch Öffnen des zusätzlichen Einlaßventils 3a Sirup zugeführt, bis in der Dosierkammer 2 die mittlere Höhe II erreicht ist. Das Ende dieser Phase ist in Fig. 9 dargestellt. Dann wird das zusätzliche Einlaßventil 3a geschlossen und das Einlaßventil 3 geöffnet. Jetzt wird so lange Wasser zugeführt, bis in der Dosierkammer 2 die obere Höhe III erreicht ist. Dabei durchdringt das zuströmende Wasser den Sirup, wobei die Durchmischung durch den statischen Mischer 59 und die Querschnittsverengung zwischen dem Hohlraum 13 und der Mischkammer 2 den Mischvorgang unterstützt. Danach wird das Einlaßventil 3 wieder geschlossen. Nunmehr wird das Auslaßventil 5 geöffnet und es läuft das fertige Getränk über den Füllstutzen 6 in die Dose 1 ein, bis der Füllstand in der Dosierkammer 2 auf die untere Höhe I abgesunken ist. Daraufhin wird das Auslaßventil 5 umgehend geschlossen. Die dem Volumen zwischen dem Füllstand I und III entsprechende Menge des fertigen Getränks befindet sich nunmehr in der Dose 1. Diese Dose 1 wird entfernt und es beginnt mit Öffnen des Einlaßventils 3a und Zuführen einer leeren Dose 1 ein neuer Füllzyklus. Dabei werden die Füllhöhen I bis IV in der Dosierkammer 2 durch den mit einem Schwimmer 46 versehenen Sensor 44 erfaßt und an die Steuereinrichtung 29 weitergeleitet.

Bei Bedarf können weitere Vorratsbehälter 4b usw. mit zugeordneten Einlaßventilen 3b usw. vorgesehen werden, je nach Anzahl der zu mischenden Komponenten.

Bei Verarbeitung besonders zähflüssiger oder breiartiger Komponenten kann der Einlaß auch direkt in die Dosierkammer 2 erfolgen, erforderlichenfalls mit Hilfe eines angetriebenen Dosierkolbens.

Anstelle des in Fig. 9 gezeigten kurzen Füllstutzens für die Abfüllung unter atmosphärischem Druck können auch andere Füllstutzen eingesetzt werden, wie sie z.B. in den Fig. 2, 3, 7 und 8 gezeigt sind. Damit ist erforderlichenfalls auch eine Abfüllung unter Gegendruck möglich. Auch sind andere Sensoren für die Dosierkammer 2 verwendbar, wie sie z.B. in den Fig. 1, 5 und 6 dargestellt sind.

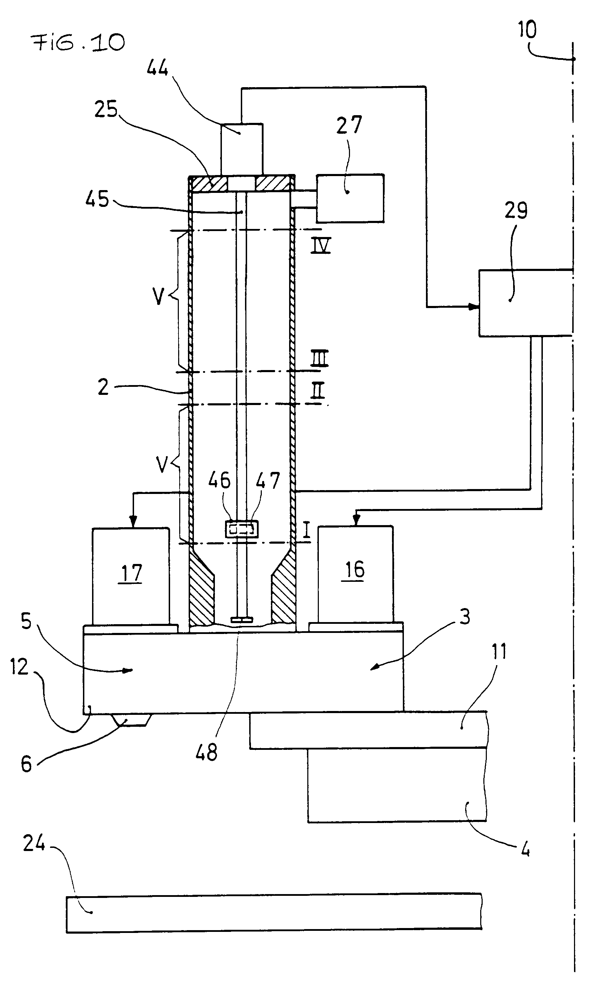

Bei der Vorrichtung nach der Fig. 10 ist im Deckel 25 der zylindrischen Dosierkammer 2 wiederum ein einziger Sensor in Form einer Schwimmersonde 44 befestigt. Diese weist einen stabförmigen, z.B. auf induktiver Basis arbeitenden Wegaufnehmer 45 mit kreisförmigem Querschnitt auf, der konzentrisch zur Mittelachse der Dosierkammer 2 in dieser angeordnet ist. Auf dem Wegaufnehmer 45 ist ein ringförmiger Schwimmer 46 frei beweglich geführt, dessen unterste Position durch einen scheibenförmigen Anschlag 48 am unteren Ende des Wegaufnehmers 45 definiert ist. Im Schwimmer 46 ist ein magnetisches Schaltstück 47 befestigt, das mit dem Wegaufnehmer 45 zusammenwirkt. Die Schwimmersonde 44 liefert ein Meßsignal, z.B. in Form einer elektrischen Spannung, das proportional zur Stellung des Schwimmers 47 bezüglich des Wegaufnehmers 45 und damit zur Füllhöhe in der Dosierkammer 2 ist.

Die Dosierkammer 2 ist im Vergleich zu der Höhe, wie sie für ein abzufüllendes Volumen V von beispielsweise 0,5 Litern erforderlich wäre, nach oben hin enorm verlängert, so daß ihr Gesamtvolumen mehr als einen Liter beträgt.

Dementsprechend beträgt das Verhältnis von der Höhe zum Durchmesser der Dosierkammer 2 mehr als 3:1, wobei auch Verhältnisse von 5:1 und mehr ohne weiteres möglich sind. Die Größe des abzufüllenden Volumens V und dessen Höhenlage in der Dosierkammer 2 werden durch die Schwimmersonde 44 und die damit verbundene elektronische Steuereinrichtung 29 bestimmt, die jederzeit den Füllstand in der Dosierkammer 2 kennt. In der Fig. 10 sind zwei Varianten dargestellt: Beim Abfüllen von empfindlichen oder zu starker Schaumbildung neigenden Flüssigkeiten wird das abzufüllende Volumen V in den unteren Bereich der Dosierkammer 2 gelegt und durch die beiden Füllstände I und II definiert. Beim Abfüllen von unempfindlichen, problemlosen Flüssigkeiten wird das abzufüllende Volumen V in den oberen Bereich der Dosierkammer 2 gelegt und durch die beiden Füllstände III und IV definiert. Die Füllstände I bis IV werden ihrerseits durch entsprechende Schaltpunkte der Schwimmersonde 44 repräsentiert, wie sie beispielsweise in Form von Spannungswerten in der Steuereinrichtung 29 gespeichert sind. Die beiden zusammengehörigen Füllstände für minimalen und maximalen Füllstand sind unter Beibehaltung ihres Abstands über die gesamte Höhe der Dosierkammer 2 durch ein einziges Stellelement, z.B. ein nicht gezeigtes Potentiometer an der Steuereinrichtung 29, verstellbar. Die Höhenlage des Abfüllvolumens V und damit die Auslaufgeschwindigkeit der Flüssigkeit aus dem Füllstutzen 6 sind daher einfach und rasch verstellbar.

Die durch die Steuereinrichtung 29 bewirkte Funktion der vorbeschriebenen Vorrichtung ist unabhängig von der Höhenlage des abzufüllenden Volumens V: Bei Beginn eines Füllvorgangs wird das Einlaßventil 3 durch Betätigung des Stellmotors 16 geöffnet und die Flüssigkeit läuft aus dem Vorratsbehälter 4 in die Dosierkammer 2 von unten her ein. Sobald der eingestellte obere Füllstand II bzw. IV erreicht ist, wird das Einlaßventil 3 durch den Stellmotor 16 geschlossen. Wenn ein zu füllendes Gefäß unter dem Füllstutzen 6 bzw. auf dem Drehtisch 24 bereitsteht ist, wird das Auslaßventil 5 durch den Stellmotor 17 geöffnet und die Flüssigkeit läuft aus der Dosierkammer 2 über den Füllstutzen 6 in das Gefäß ein. Die sich dabei einstellende Auslaufgeschwindigkeit ist abhängig vom jeweiligen Füllstand in der Dosierkammer 2. Sobald der jeweils eingestellte untere Füllstand I bzw. III erreicht ist, wird das Auslaßventil 5 durch den Stellmotor 17 geschlossen und der Füllvorgang ist beendet. Dabei verbleibt in jedem Falle in der Dosierkammer 2 eine mehr oder weniger große Flüssigkeitsmenge, so daß für konstante Strömungsverhältnisse gesorgt ist.

## Patentansprüche

1. Vorrichtung zum portionsweisen Abfüllen von Flüssigkeiten in Flaschen, Dosen oder dergl. Behälter (1) mit mehreren am Umfang eines um eine senkrechte Drehachse (10) umlaufenden Rotors (11) angeordneten volumetrischen Dosierkammern (2), von denen jede über ein steuerbares Einlaßventil (3) mit einem Vorratsbehälter (4) für die Flüssigkeit und über ein steuerbares Auslaßventil (5) mit einem Füllstutzen (6) verbunden ist,
**dadurch gekennzeichnet**, daß
jeder Dosierkammer (2) eine auf deren Füllstand ansprechende Sensoreinrichtung (7, 8, 9) mit mindestens einem Sensor zugeordnet ist, die
beim Ansteigen des Füllstandes in der Dosierkammer (2) auf eine bestimmte Höhe (II, III) das Einlaßventil (3) und
beim Abfallen des Füllstandes in der Dosierkammer (2) auf eine bestimmte Höhe (I) das Auslaßventil (5) schließt.

2. Vorrichtung nach Anspruch 1, dadurch gekennzeichnet, daß die Sensoreinrichtung (7, 8, 9) eine Stabsonde umfaßt und im Inneren der Dosierkammer (2) angeordnet ist.

3. Vorrichtung nach Anspruch 1 oder 2, dadurch gekennzeichnet, daß die Sensoreinrichtung (7, 8, 9) einen elektrischen Leitfähigkeitsmesser umfaßt.

4. Vorrichtung nach einem der Ansprüche 1 bis 3, dadurch gekennzeichnet, daß die Sensoreinrichtung (7, 8, 9) zur Anpassung an verschiedene Füllstände verstellbar angeordnet ist.

5. Vorrichtung nach einem der Ansprüche 1 bis 3, dadurch gekennzeichnet, daß die Sensoreinrichtung mehrere Meßpunkte für unterschiedliche Füllstände aufweist.

6. Vorrichtung nach einem der Ansprüche 1 bis 5, dadurch gekennzeichnet, daß jede Sensoreinrichtung mindestens zwei Sensoren (7, 8, 9) umfaßt, die auf unterschiedliche Füllstände ansprechen, wobei ein höherliegender Sensor (7, 8) bei Ansteigen des Füllstandes auf eine bestimmte Höhe (II, III) das Einlaßventil (3) schließt und ein tieferliegender Sensor (9) bei Abfallen des Füllstandes auf eine bestimmte Höhe (I) das Auslaßventil (5) schließt.

7. Vorrichtung nach einem der Ansprüche 1 bis 6, dadurch gekennzeichnet, daß die Meßstellen aller Sensoren (7, 8, 9) bei senkrecht angeordneter Dosierkammer (2) auf einem niedrigeren Niveau liegen, als der maximal mögliche Füllstand in der Dosierkammer (2).

8. Vorrichtung nach einem der Ansprüche 1 bis 8, dadurch gekennzeichnet, daß die Dosierkammer (2) im Bereich der Meßstelle eines Sensors (8) mit einer Querschnittsverengung (33) versehen ist.

9. Vorrichtung nach einem der Ansprüche 2 bis 8, dadurch gekennzeichnet, daß ein als Stabsonde ausgebildeter Sensor (8, 9) derartig gekröpft ist, daß seine Meßstelle in der Mittelachse der Dosierkammer (2) liegt.

10. Vorrichtung nach einem der Ansprüche 2 bis 9, dadurch gekennzeichnet, daß die als Stabsonden ausgebildeten Sensoren (7, 8, 9) in einem lösbaren Deckel (25) der Dosierkammer (2) angeordnet sind.

11. Vorrichtung nach einem der Ansprüche 1 bis 10, dadurch gekennzeichnet, daß die Dosierkammer (2) überhalb der höchsten Meßstelle eines Sensors (7) eine Öffnung (26) aufweist.

12. Vorrichtung nach Anspruch 11, dadurch gekennzeichnet, daß die Öffnung (26) an einen Ringkanal (27) angeschlossen ist.

13. Vorrichtung nach Anspruch 12, dadurch gekennzeichnet, daß der Ringkanal (27) an eine CIP-Anlage anschließbar ist.

14. Vorrichtung nach Anspruch 12, dadurch gekennzeichnet, daß der Ringkanal (27) an eine Spanngasquelle angeschlossen ist.

15. Vorrichtung nach einem der Ansprüche 1 bis 14, gekennzeichnet durch einen Ventilblock (12) mit einem Hohlraum (13), an dessen Oberseite die in den Hohlraum (13) einmündende Dosierkammer (2) mit den Sensoren (7, 8, 9) angeordnet ist.

16. Vorrichtung nach Anspruch 15, dadurch gekennzeichnet, daß an der Oberseite des Ventilblocks (12) die Stellmotoren (16, 17) für die Ventilkörper (14, 15) des Einlaßventils (3) und des Auslaßventils (5) angeodnet sind, und daß an der Unterseite des Ventilblocks (12) auf verschiedenen Seiten der Dosierkammer (2) einerseits der Füllstutzen (6) und andererseits eine Öffnung (20) für den Flüssigkeitseinlauf ausgebildet sind.

17. Vorrichtung nach einem der Ansprüche 1 bis 16, dadurch gekennzeichnet, daß der mit einer Längsbohrung versehene Ventilkörper (15) des Auslaßventils (5) am unteren Ende mit einer rohrartigen, ins Innere eines zu füllenden Behälters (1) ragenden Verlängerung (38) versehen ist.

18. Vorrichtung nach Anspruch 17, dadurch gekennzeichnet, daß die Verlängerung (38) über die Längsbohrung und eine daran angeschlossene Leitung (39) mit der Dosierkammer (2) verbindbar ist.

19. Vorrichtung nach Anspruch 18, dadurch gekennzeichnet, daß die Verbindung zwischen der Verlängerung (38) und der Dosierkammer (2) über ein Steuerventil (40) steuerbar ist.

20. Vorrichtung nach einem der Ansprüche 15 bis 19, dadurch gekennzeichnet, daß am Ventilblock (12) mindestens ein weiteres Steuerventil (42, 43) angeordnet ist, mit dem der Füllstutzen (6) mit der Atmosphäre und/oder mit einer Spülgasquelle und/oder mit einer Vakuumquelle und/oder mit einem Spülkanal verbindbar ist.

21. Vorrichtung nach einem der Ansprüche 1 bis 20, dadurch gekennzeichnet, daß die Sensoreinrichtung (44, 50 bis 53) mindestens einen Sensor mit mindestens einer länglichen Meßzone umfaßt und ein vom Füllstand im Bereich der Meßzone abhängiges Meßsignal erzeugt.

22. Vorrichtung nach Anspruch 21, dadurch gekennzeichnet, daß die längliche Meßzone im wesentlichen die gesamte Höhe der Dosierkammer (2) bestreicht.

23. Vorrichtung nach Anspruch 22, dadurch gekennzeichnet, daß ein Sensor (44) sowohl das Einlaßventil (3) als auch das Auslaßventil (5) steuert.

24. Vorrichtung nach Anspruch 21, dadurch gekennzeichnet, daß die längliche Meßzone nur einen Teilbereich der Höhe der Dosierkammer (2) bestreicht und mehrere Sensoren (50 bis 53) mit auf verschiedenen Höhen angeordneten länglichen Meßzonen vorgesehen sind.

25. Vorrichtung nach Anspruch 24, dadurch gekennzeichnet, daß mindestens ein Sensor (50 bis 53) das Einlaßventil (3) und mindestens ein anderer Sensor (50 bis 53) das Auslaßventil (5) steuert.

26. Vorrichtung nach einem der Ansprüche 21 bis 25, dadurch gekennzeichnet, daß der Sensor (44) als Schwimmersonde ausgebildet ist.

27. Vorrichtung nach Anspruch 26, dadurch gekennzeichnet, daß der Sensor (44) einen stabförmigen Wegaufnehmer (45) und einen darauf beweglich geführten Schwimmer (46) aufweist.

28. Vorrichtung nach Anspruch 27, dadurch gekennzeichnet, daß der stabförmige Wegabnehmer (45) konzentrisch zur Mittelachse der Dosierkammer (2) angeordnet ist.

29. Vorrichtung nach Anspruch 27 oder 28, dadurch gekennzeichnet, daß am Schwimmer (46) ein Schaltstück (47) für den Wegaufnehmer (45) befestigt ist.

30. Vorrichtung nach einem der Ansprüche 21 bis 25, dadurch gekennzeichnet, daß mehrere drahtartige Sensoren (50 bis 53) an einem gemeinsamen Trägerstab (49) parallel zu dessen Mittelachse und über seinen Umfang verteilt angeordnet sind.

31. Vorrichtung nach Anspruch 30, dadurch gekennzeichnet, daß der Trägerstab (49) konzentrisch zur Mittelachse der Dosierkammer (2) angeordnet ist.

32. Vorrichtung nach einem der Ansprüche 1 bis 31, dadurch gekennzeichnet, daß das Volumen der Dosierkammer (2) wesentlich größer ist als das Volumen einer abzufüllenden Flüssigkeitsportion.

33. Vorrichtung nach Anspruch 32, dadurch gekennzeichnet, daß die Höhe der Dosierkammer (2) wesentlich größer ist als die für das Volumen einer abzufüllenden Flüssigkeitsportion erforderliche Höhe.

34. Vorrichtung nach Anspruch 32 oder 33, dadurch gekennzeichnet, daß das Volumen der Dosierkammer (2) mindestens zweimal so groß ist wie das Volumen einer abzufüllenden Flüssigkeitsportion.

35. Vorrichtung nach einem der Ansprüche 1 bis 34, dadurch gekennzeichnet, daß das Verhältnis von Höhe zu Durchmesser der Dosierkammer (2) mindestens 3:1 beträgt.

36. Vorrichtung nach einem der Ansprüche 32 bis 35, dadurch gekennzeichnet, daß die beiden Meßpunkte eines Sensors (44) oder mehrerer Sensoren, deren höhenmäßiger Abstand das Volumen einer abzufüllenden Flüssigkeitsportion definiert, gemeinsam relativ zur Dosierkammer (2) höhenverstellbar sind.

37. Vorrichtung nach einem der Ansprüche 1 bis 36, dadurch gekennzeichnet, daß mindestens ein zusätzlicher Vorratsbehälter (4a) für eine Flüssigkeit vorgesehen ist, mit dem jede Dosierkammer (2) verbindbar ist.

38. Vorrichtung nach Anspruch 37, dadurch gekennzeichnet, daß jede Dosierkammer (2) über mehrere steuerbare Einlaßventile (3, 3a) mit mehreren Vorratsbehältern (4, 4a) für unterschiedliche Flüssigkeiten verbunden ist.

39. Vorrichtung nach Anspruch 38, dadurch gekennzeichnet, daß die Einlaßventile (3, 3a) zumindest teilweise durch den Sensor (44) bzw. die Sensoren der Dosierkammer (2) steuerbar sind.

40. Vorrichtung nach Anspruch 39, dadurch gekennzeichnet, daß der Sensor (44) bzw. die Sensoren der Dosierkammer (2) bei Ansteigen des Füllstandes in der Dosierkammer (2) auf eine bestimmte erste Höhe (II) ein erstes Einlaßventil (3a) und bei Ansteigen auf eine bestimmte zweite Höhe (III) ein zweites Einlaßventil (3) schließt.

41. Vorrichtung nach einem der Ansprüche 37 bis 40, gekennzeichnet durch einen Ventilblock (12) mit einem Hohlraum (13), in den ein Füllstutzen (6), die Dosierkammer (2) und mehrere Öffnungen (20, 20a) einmünden, die mit jeweils einem eigenen Vorratsbehälter (4, 4a) verbunden sind.

42. Vorrichtung nach Anspruch 41, dadurch gekennzeichnet, daß im Hohlraum (13) zwischen der Dosierkammer (2) und den Öffnungen (20, 20a) ein Mischorgan (59) angeordnet ist.

43. Vorrichtung nach einem der Ansprüche 37 bis 42, dadurch gekennzeichnet, daß mindestens einem der Einlaßventile (3, 3a) ein Dosierkolben zugeordnet ist.

44. Vorrichtung nach einem der Ansprüche 1 bis 43, dadurch gekennzeichnet, daß dem Füllstutzen (6) eine auf den Füllstand in einem zu füllenden Behälter ansprechende Einrichtung (54, 55) zugeordnet ist.

45. Vorrichtung nach Anspruch 44, dadurch gekennzeichnet, daß die Einrichtung ein in den zu füllenden Behälter einführbares Rückgasrohr (55) mit einem Anschnitt (56) aufweist.

46. Vorrichtung nach Anspruch 44, dadurch gekennzeichnet, daß die Einrichtung eine an den zu füllenden Behälter anschließbare Rückgasleitung mit einem Schwimmerventil aufweist.

47. Vorrichtung nach Anspruch 44, dadurch gekennzeichnet, daß die Einrichtung mindestens einen auf den Füllstand in einem zu füllenden Behälter ansprechenden Sensor (54) aufweist.

48. Vorrichtung nach Anspruch 47, dadurch gekennzeichnet, daß der Sensor (54) als eine in einen zu füllenden Behälter einführbare Füllstandsonde ausgebildet ist.

49. Vorrichtung nach Anspruch 47 oder 48, dadurch gekennzeichnet, daß der Sensor (54) eine längliche Meßzone aufweist und ein vom Füllstand im Bereich der Meßzone abhängiges Meßsignal erzeugt.

50. Vorrichtung nach einem der Ansprüche 44 bis 49, dadurch gekennzeichnet, daß die Einrichtung (54, 55) bei Erreichen eines vorbestimmten Füllstandes in einem zu füllenden Behälter den Füllvorgang zu beenden vermag.

51. Vorrichtung nach Anspruch 50, dadurch gekennzeichnet, daß ausschließlich die Einrichtung (54, 55) den Füllvorgang beendet.

52. Vorrichtung nach Anspruch 50, dadurch gekennzeichnet, daß die Einrichtung (54, 55) in Zusammenwirkung mit mindestens einem Sensor (8, 9) der Dosierkammer (2) den Füllvorgang beendet.

53. Vorrichtung nach Anspruch 52, dadurch gekennzeichnet, daß die Einrichtung (54, 55) einem Sensor (9) der Dosierkammer (2) nachrangig geschaltet ist.

54. Vorrichtung nach Anspruch 52, dadurch gekennzeichnet, daß die Einrichtung (54, 55) einem Sensor (8) der Dosierkammer (2) vorrangig geschaltet ist.

55. Vorrichtung nach einem der Ansprüche 44 bis 54, dadurch gekennzeichnet, daß der Dosierkammer (2) ein Sensor (8) zugeordnet ist, der, ggf. in Zusammenwirkung mit einem höherliegenden Sensor (7), ein minimales Füllvolumen definiert.

56. Vorrichtung nach einem der Ansprüche 44 bis 55, dadurch gekennzeichnet, daß der Dosierkammer (2) ein Sensor (9) zugeordnet ist, der, ggf. in Zusammenwirkung mit einem höherliegenden Sensor (7), ein maximales Füllvolumen definiert.

57. Vorrichtung nach einem der Ansprüche 52 bis 56, dadurch gekennzeichnet, daß die Einrichtung (54, 55) derart ausgebildet ist, daß sie bei Erreichen einer vorbestimmten Füllhöhe den Füllvorgang beendet, sofern nicht vorher das Auslaßventil (5) nach Einlaufen eines bestimmten Füllvolumens in den zu füllenden Behälter geschlossen worden ist.

58. Vorrichtung nach einem der Ansprüche 52 bis 57, dadurch gekennzeichnet, daß die Einrichtung (54, 55) derart ausgebildet ist, daß sie bei Erreichen einer vorbestimmten Füllhöhe den Füllvorgang beendet, sofern vorher ein bestimmtes Füllvolumen in den zu füllenden Behälter eingelaufen ist.

59. Vorrichtung nach einem der Ansprüche 44 bis 58, dadurch gekennzeichnet, daß die Einrichtung (54, 55) abschaltbar ist.

60. Vorrichtung nach einem der Ansprüche 1 bis 59, dadurch gekennzeichnet, daß jedem Füllstutzen (6) mindestens zwei Dosierkammern (2) mit jeweils einem eigenen Einlaßventil (3), einem eigenen Auslaßventil (5) und einem eigenen Sensor (7, 8, 9, 44, 50 bis 53) zugeordnet sind.

## Claims

1. A device for filling liquids in portions into bottles, cans or similar receptacles (1), comprising a plurality of volumetric dosing chambers (2), which are arranged on the circumference of a rotor (11) rotating about a vertical axis of rotation (10) and each of which is connected to a storage reservoir (4) for the liquid via a controllable inlet valve (3) and to a filler neck (6) via a controllable outlet valve (5),
**characterized in that**
each dozing chamber (2) has associated therewith a sensor means (7, 8, 9), which responds to the filling level in said dozing chamber (2) and which comprises at least one sensor, said sensor means
closing the inlet valve (3) when the filling level in the dozing chamber (2) has risen to a specific height (II, III) and
closing the outlet valve (5) when the filling level in the dozing chamber (2) has dropped to a specific height (I).

2. A device according to claim 1, characterized in that the sensor means (7, 8, 9) comprises a rod-type probe and is arranged in the interior of the dozing chamber (2).

3. A device according to claim 1 or 2, characterized in that the sensor means (7, 8, 9) comprises an electric conductivity meter.

4. A device according to one of the claims 1 to 3, characterized in that, for the purpose of adaptation to different filling levels, the sensor means (7, 8, 9) is arranged such that it can be adjusted.

5. A device according to one of the claims 1 to 3, characterized in that the sensor means has several measuring points for different filling levels.

6. A device according to one of the claims 1 to 5, characterized in that each sensor means comprises at least two sensors (7, 8, 9) which respond to different filling levels, a sensor (7, 8) arranged on a higher level closing the inlet valve (3) when the filling level has risen to a specific height (II, III), and a sensor (9) arranged on a lower level closing the outlet valve (5) when the filling level has dropped to a specific height (I).

7. A device according to one of the claims 1 to 6, characterized in that, when the dosing chamber (2) is arranged vertically, the measuring points of all sensors (7, 8, 9) are positioned at a lower level than the maximum possible filling level in the dosing chamber (2).

8. A device according to one of the claims 1 to 7, characterized in that the dosing chamber (2) is provided with a reduction of cross-sectional area (33) in the area of the measuring point of a sensor (8).

9. A device according to one of the claims 2 to 8, characterized in that a sensor (8, 9) constructed as a rod-type probe is bent in such a way that its measuring point is located on the central axis of the dosing chamber (2).

10. A device according to one of the claims 2 to 9, characterized in that the sensors (7, 8, 9) constructed as rod-type probes are arranged in a releasable cover (25) of the dosing chamber (2).

11. A device according to one of the claims 1 to 10, characterized in that the dosing chamber (2) has an opening (26) above the highest measuring point of a sensor (7).

12. A device according to claim 11, characterized in that the opening (26) is connected to a ring passage (27).

13. A device according to claim 12, characterized in that the ring passage (27) is adapted to be connected to a CIP system.

14. A device according to claim 12, characterized in that the ring passage (27) is connected to a voltage source.

15. A device according to one of the claims 1 to 14, characterized by a valve block (12), which includes a cavity (13) and on the upper side of which the dosing chamber (2) with the sensors (7, 8, 9) is arranged, said dosing chamber (2) opening into said cavity (13).

16. A device according to claim 15, characterized in that on the upper side of the valve block (12) the motor operators (16, 17) for the valve bodies (14, 15) of the inlet valve (3) and of the outlet valve (5) are arranged, and that on the bottom side of the valve block (12) there are provided the filler neck (6) on the one hand and an inlet opening (20) for the liquid on the other, said filler neck (6) and said opening (20) being formed on different sides of the dosing chamber (2).

17. A device according to one of the claims 1 to 16, characterized in that the valve body (15), which forms part of the outlet valve (5) and which is provided with a longitudinal hole, has at the lower end thereof a tubular extension (38) projecting into the interior of a receptacle (1) to be filled.

18. A device according to claim 17, characterized in that the extension (38) is adapted to be connected to the dosing chamber (2) via the longitudinal hole and a line (39) connected to said hole.

19. A device according to claim 18, characterized in that the connection between the extension (38) and the dosing chamber (2) is adapted to be controlled via a control valve (40).

20. A device according to one of the claims 15 to 19, characterized in that the valve block (12) has arranged thereon at least one additional control valve (42, 43) by means of which the filler neck (6) can be connected to the atmosphere and/or to a source of flush gas and/or to a vacuum source and/or to a flushing passage.

21. A device according to one of the claims 1 to 20, characterized in that the sensor means (44, 50 to 53) comprises at least one sensor provided with at least one elongate measurement zone and produces a measuring signal depending on the filling level in the area of said measurement zone.

22. A device according to claim 21, characterized in that the elongate masurement zone is essentially effective with regard to the entire height of the dosing chamber (2).

23. A device according to claim 22, characterized in that one sensor (44) controls the inlet valve (3) as well as the outlet valve (5).

24. A device according to claim 21, characterized in that the elongate measurement zone is only effective with regard to a subarea of the height of the dosing chamber (2), and that there are provided several sensors (50 to 53) having elongate measurement zones which are arranged on different levels.

25. A device according to claim 24, characterized in that at least one of the sensors (50 to 53) controls the inlet valve (3) and that at least one other sensor (50 to 53) controls the outlet valve (5).

26. A device according to one of the claims 21 to 25, characterized in that the sensor (44) is a float-type probe.

27. A device according to claim 26, characterized in that the sensor (44) comprises a rod-shaped displacement gauge (45) and a float (46) which is guided on said displacement gauge such that it is freely movable,

28. A device according to claim 27, characterized in that the rod-shaped displacement gauge (45) is arranged concentrically with the central axis of the dosing chamber (2).

29. A device according to claim 27 or 28, characterized in that a switching member (47) for the displacement gauge (45) is secured to the float (46).

30. A device according to one of the claims 21 to 25, characterized in that several wirelike sensors (50 to 53) are arranged on a common carrier rod (49) parallel to the central axis thereof, said sensors (50 to 53) being distributed over the cirumference of said carrier rod (49).

31. A device according to claim 30, characterized in that the carrier rod (49) is arranged concentrically with the central axis of the dosing chamber (2).

32. A device according to one of the claims 1 to 31, characterized in that the volume of the dosing chamber (2) is essentially larger than the volume of one portion of the liquid to be canned or bottled.

33. A device according to claim 32, characterized in that the height of the dosing chamber (2) is essentially higher than the height required for the volume of one portion of the liquid to be canned or bottled.

34. A device according to claim 32 or 33, characterized in that the volume of the dosing chamber (2) is at least twice as large as the volume of one portion of the liquid to be canned or bottled.

35. A device according to one of the claims 1 to 34, characterized in that the ratio of height to diameter of the dosing chamber (2) is at least 3:1.

36. A device according to one of the claims 32 to 35, characterized in that the two measuring points of a sensor (44) or of several sensors are adapted to be vertically adjusted in common relative to the dosing chamber (2), the vertical distance between said measuring points defining the volume of one portion of the liquid to be canned or bottled.

37. A device according to one of the claims 1 to 36, characterized in that at least one additional storage reservoir (4a) for a liquid is provided, each of the dosing chambers (2) being adapted to be connected to said additional storage reservoir (4a).

38. A device according to claim 37, characterized in that each dosing chamber (2) is connected to a plurality of storage reservoirs (4, 4a) for different liquids via several controllable inlet valves (3, 3a).

39. A device according to claim 38, characterized in that at least part of the inlet valves (3, 3a) is adapted to be controlled by the sensor (44) or the sensors of the dosing chamber (2).

40. A device according to claim 39, characterized in that the sensor (44) or the sensors of the dosing chamber (2) close(s) a first inlet valve (3a) when the filling level in the dosing chamber (2) has risen to a specific first height (II) and a second inlet valve (3) when the filling level in the dosing chamber (2) has risen to a specific second height (III).

41. A device according to one of the claims 37 to 40, characterized by a valve block (12) which includes a cavity (13), a filler neck (6), the dosing chamber (2) and several openings (20, 20a), which are each connected to a separate storage reservoir (4, 4a), leading into said cavity (13).

42. A device according to claim 41, characterized in that a mixing member (59) is arranged in the cavity (13) between the dosing chamber (2) and the openings (20, 20a).

43. A device according to one of the claims 37 to 42, characterized in that at least one of the inlet valves (3, 3a) has associated therewith a dosing piston.

44. A device according to one of the claims 1 to 43, characterized in that the filler neck (6) has associated therewith a means (54, 55) responding to the filling level in a receptacle to be filled.

45. A device according to claim 44, characterized in that said means includes a reflux gas tube (55) with a lower end (56), said reflux gas tube (55) being adapted to be introduced in the receptacle to be filled.

46. A device according to claim 44, characterized in that said means includes a reflux gas line with a float valve, said reflux gas line being adapted to be connected to the receptacle to be filled.

47. A device according to claim 44, characterized in that said means includes at least one sensor (54) responding to the filling level in a receptacle to be filled.

48. A device according to claim 47, characterized in that the sensor (54) is a filling-level probe which is adapted to be introduced in a receptacle to be filled.

49. A device according to claim 47 or 48, characterized in that the sensor (54) is provided with an elongate measurement zone and produces a measuring signal which depends on the filling level in the area of said measurement zone.

50. A device according to one of the claims 44 to 49, characterized in that said means (54, 55) is capable of terminating the filling operation when a predetermined filling level has been reached in a receptacle to be filled.

51. A device according to claim 50, characterized in that the filling operation is exclusively terminated by said means (54, 55).

52. A device according to claim 50, characterized in that said means (54, 55) terminates the filling operation in cooperation with at least one sensor (8, 9) of the dosing chamber (2).

53. A device according to claim 52, characterized in that said means (54, 55) is connected such that a sensor (9) of the dosing chamber (2) works with precedence relative thereto.

54. A device according to claim 52, characterized in that said means (54, 55) is connected such that it works with precedence relative to a sensor (8) of the dosing chamber (2).

55. A device according to one of the claims 44 to 54, characterized in that the dosing chamber (2) has associated therewith a sensor (8) defining, if desired in cooperation with a sensor (7) arranged on a higher level, a minimum filling volume.

56. A device according to one of the claims 44 to 55, characterized in that the dosing chamber (2) has associated therewith a sensor (9) defining, if desired in cooperation with a sensor (7) arranged on a higher level, a maximum filling volume.

57. A device according to one of the claims 52 to 56, characterized in that said means (54, 55) is of such a nature that it will terminate the filling operation when a predetermined filling level has been reached, unless the outlet valve (5) has been closed previously after a specific filling volume has flown into the receptacle to be filled.

58. A device according to one of the claims 52 to 57, characterized in that said means (54, 55) is of such a nature that it will terminate the filling operation when a predetermined filling level has been reached, provided that a predetermined filling volume has previously flown into the receptacle to be filled.

59. A device according to one of the claims 44 to 58, characterized in that said means (54, 55) is adapted to be switched off.

60. A device according to one of the claims 1 to 59, characterized in that each filler neck (6) has associated therewith at least two dosing chambers (2) having each a separate inlet valve (3), a separate outlet valve (5) and a separate sensor (7, 8, 9, 44, 50 to 53).

## Revendications

1. Appareil pour la mise de portions de liquides dans des bouteilles, boîtes ou récipients semblables (1), comportant plusieurs chambres de dosage volumétriques (2) placées sur le pourtour d'un rotor (11) tournant autour d'un axe vertical (10) et reliées chacune, par une vanne d'admission commandée (3), à un réservoir (4) pour le liquide et, par une vanne d'émission commandée (5), à une tubulure de remplissage (6), caractérisé par le fait qu'à chaque chambre de dosage (2) est adjoint un dispositif capteur (7, 8, 9) répondant au niveau de remplissage de celle-ci et comportant au moins un capteur qui, lorsque le niveau de remplissage de la chambre de dosage (2) est monté à une hauteur déterminée (II, III), ferme la vanne d'admission (3) et, lorsque ce niveau est descendu à une hauteur déterminée (I), ferme la vanne d'émission (5).

2. Appareil selon la revendication 1, caractérisé par le fait que le dispositif capteur (7, 8, 9) comprend une tige sonde et est placé à l'intérieur de la chambre de dosage (2).

3. Appareil selon l'une des revendications 1 et 2, caractérisé par le fait que le dispositif capteur (7, 8, 9) comprend un appareil électrique de mesure de conductivité.

4. Appareil selon l'une des revendications 1 à 3, caractérisé par le fait que le dispositif capteur (7, 8, 9) est monté mobile pour son adaptation à différents niveaux de remplissage.

5. Appareil selon l'une des revendications 1 à 3, caractérisé par le fait que le dispositif capteur présente plusieurs points de mesure pour des niveaux de remplissage différents.

6. Appareil selon l'une des revendications 1 à 5, caractérisé par le fait que chaque dispositif capteur comprend au moins deux capteurs (7, 8, 9) qui répondent à des niveaux de remplissage différents, un capteur supérieur (7, 8) fermant la vanne d'admission (3) lorsque le niveau de remplissage est monté à une hauteur déterminée (II, III) et un capteur inférieur (9) fermant la vanne d'émission (5) lorsque le niveau de remplissage est descendu à une hauteur déterminée (I).

7. Appareil selon l'une des revendications 1 à 6, caractérisé par le fait que les emplacements de mesure de tous les capteurs (7, 8, 9) sont, lorsque la chambre de dosage (2) est placée verticalement, situés à un niveau plus bas que le niveau maximal possible de remplissage de la chambre de dosage (2).

8. Appareil selon l'une des revendications 1 à 8, caractérisé par le fait que la chambre de dosage (2) est pourvue d'un rétrécissement de section (33) dans la zone de l'emplacement de mesure d'un capteur (8).

9. Appareil selon l'une des revendications 2 à 8, caractérisé par le fait qu'un capteur (8, 9) formé d'une tige sonde est coudé de façon telle que son emplacement de mesure soit situé sur l'axe de la chambre de dosage (2).

10. Appareil selon l'une des revendications 2 à 9, caractérisé par le fait que les capteurs (7, 8, 9), formés de tiges sondes, sont placés dans un couvercle amovible (25) de la chambre de dosage (2).

11. Appareil selon l'une des revendications 1 à 10, caractérisé par le fait que la chambre de dosage (2) présente un orifice (26) au-dessus de l'emplacement de mesure le plus haut d'un capteur (7).

12. Appareil selon la revendication 11, caractérisé par le fait que l'orifice (26) communique avec un conduit circulaire (27).

13. Appareil selon la revendication 12, caractérisé par le fait que le conduit circulaire (27) peut être relié à une installation CIP.

14. Appareil selon la revendication 12, caractérisé par le fait que le conduit annulaire (27) est relié à une source de gaz de mise en contrainte.

15. Appareil selon l'une des revendications 1 à 14, caractérisé par un bloc de vannes (12) ayant une cavité (13) sur le dessus de laquelle est placée la chambre de dosage (2) pourvue des capteurs (7, 8, 9), qui débouche dans cette cavité (13).

16. Appareil selon la revendication 15, caractérisé par le fait que sur le dessus du bloc de vannes (12) sont placés les servomoteurs (16, 17) pour les obturateurs (14, 15) de la vanne d'admission (3) et de la vanne d'émission (5), et que sur le dessous du bloc de vannes (12) sont faits sur des côtés différents de la chambre de dosage (2) la tubulure de remplissage (6) et un orifice (20) pour l'entrée du liquide.

17. Appareil selon l'une des revendications 1 à 16, caractérisé par le fait que l'obturateur (15), pourvu d'un trou longitudinal, de la vanne d'émission (5) est pourvu à son extrémité inférieure d'une rallonge tubulaire (38) qui entre dans un récipient (1) à remplir.

18. Appareil selon la revendication 17, caractérisé par le fait que la rallonge (38) peut être reliée à la chambre de dosage (2) par le trou longitudinal et une conduite (39) jointe à celui-ci.

19. Appareil selon la revendication 18, caractérisé par le fait que la communication entre la rallonge (38) et la chambre de dosage (2) peut être commandée par une vanne de commande (40).

20. Appareil selon l'une des revendications 15 à 19, caractérisé par le fait que sur le bloc de vannes (12) est placée au moins une autre vanne de commande (42, 43) qui permet de relier la tubulure de remplissage (6) à l'atmosphère et/ou à une source de gaz de lavage et/ou à une source de vide et/ou à un conduit de lavage.

21. Appareil selon l'une des revendications 1 à 20, caractérisé par le fait que le dispositif capteur (44, 50 à 53) comprend au moins un capteur ayant au moins une zone de mesure allongée et produit un signal de mesure dépendant du niveau de remplissage dans la région de la zone de mesure.

22. Appareil selon la revendication 21, caractérisé par le fait que la zone de mesure allongée couvre sensiblement toute la hauteur de la chambre de dosage (2).

23. Appareil selon la revendication 22, caractérisé par le fait qu'un capteur (44) commande à la fois la vanne d'admission (3) et la vanne d'émission (5).

24. Appareil selon la revendication 21, caractérisé par le fait que la zone de mesure allongée ne couvre qu'une partie de la hauteur de la chambre de dosage (2) et il est prévu plusieurs capteurs (50 à 53) ayant des zones de mesure allongées placées à différentes hauteurs.

25. Appareil selon la revendication 24, caractérisé par le fait qu'au moins un capteur (50 à 53) commande la vanne d'admission (3) et au moins un autre capteur (50 à 53) commande la vanne d'émission (5).

26. Appareil selon l'une des revendications 21 à 25, caractérisé par le fait que le capteur (44) est une sonde à flotteur.

27. Appareil selon la revendication 26, caractérisé par le fait que le capteur (44) présente un capteur de déplacements en forme de tige (45) et un flotteur (46) monté mobile sur celui-ci.

28. Appareil selon la revendication 27, caractérisé par le fait que le capteur de déplacements en forme de tige (45) est placé sur l'axe de la chambre de dosage (2).

29. Appareil selon l'une des revendications 27 et 28, caractérisé par le fait qu'au flotteur (46) est fixée une pièce de contact (47) pour le capteur de déplacements (45).

30. Appareil selon l'une des revendications 21 à 25, caractérisé par le fait que plusieurs capteurs du genre fil (50 à 53) sont placés sur une tige support commune (49) parallèlement à l'axe de celle-ci et répartis sur le pourtour de celle-ci.

31. Appareil selon la revendication 30, caractérisé par le fait que la tige support (49) est placée sur l'axe de la chambre de dosage (2).

32. Appareil selon l'une des revendications 1 à 31, caractérisé par le fait que le volume de la chambre de dosage (2) est nettement plus grand que celui d'une portion de liquide à mettre en récipient.

33. Appareil selon la revendication 32, caractérisé par le fait que la hauteur de la chambre de dosage (2) est nettement plus grande que la hauteur nécessaire pour le volume d'une portion de liquide à mettre en récipient.

34. Appareil selon l'une des revendications 32 et 33, caractérisé par le fait que le volume de la chambre de dosage (2) est au moins deux fois plus grand que celui d'une portion de liquide à mettre en récipient.

35. Appareil selon l'une des revendications 1 à 34, caractérisé par le fait que le rapport de la hauteur au diamètre de la chambre de dosage (2) est d'au moins 3.

36. Appareil selon l'une des revendications 32 à 35, caractérisé par le fait que les deux points de mesure d'un capteur (44) ou de plusieurs capteurs, dont la distance verticale détermine le volume d'une portion de liquide à mettre en récipient, peuvent être déplacés en hauteur ensemble par rapport à la chambre de dosage (2).

37. Appareil selon l'une des revendications 1 à 36, caractérisé par le fait qu'il y est prévu au moins un réservoir supplémentaire (4a) pour un liquide auquel chaque chambre de dosage (2) peut être reliée.

38. Appareil selon la revendication 37, caractérisé par le fait que chaque chambre de dosage (2) est reliée par plusieurs vannes d'admission commandées (3, 3a) à plusieurs réservoirs (4, 4a) pour des liquides différents.

39. Appareil selon la revendication 38, caractérisé par le fait que les vannes d'admission (3, 3a) peuvent être commandées au moins en partie par le capteur (44) ou les capteurs de la chambre de dosage (2).

40. Appareil selon la revendication 39, caractérisé par le fait que le capteur (44) ou les capteurs de la chambre de dosage (2) ferme(nt) une première vanne d'admission (3a) lorsque le niveau de remplissage de la chambre de dosage (2) est monté à une première hauteur déterminée (II) et une deuxième vanne d'admission (3) lorsque ce niveau atteint une deuxième hauteur déterminée (III).

41. Appareil selon l'une des revendications 37 à 40, caractérisé par un bloc de vannes (12) ayant une cavité (13) dans laquelle débouchent une tubulure de remplissage (6), la chambre de dosage (2) et plusieurs orifices (20, 20a) qui sont reliés chacun à un réservoir (4, 4a).

42. Appareil selon la revendication 41, caractérisé par le fait qu'un organe mélangeur (59) est placé dans la cavité (13) entre la chambre de dosage (2) et les orifices (20, 20a).

43. Appareil selon l'une des revendications 37 à 42, caractérisé par le fait qu'à au moins une des vannes d'admission (3, 3a) est adjoint un piston doseur.

44. Appareil selon l'une des revendications 1 à 43, caractérisé par le fait qu'à la tubulure de remplissage (6) est adjoint un dispositif (54, 55) qui répond au niveau de remplissage d'un récipient à remplir.

45. Appareil selon la revendication 44, caractérisé par le fait que le dispositif présente un tuyau à gaz de retour (55) qui peut être introduit dans le récipient à remplir et est pourvu d'un chanfrein (56).

46. Appareil selon la revendication 44, caractérisé par le fait que le dispositif présente une conduite de gaz de retour qui peut être jointe au récipient à remplir et est pourvue d'une vanne à flotteur.

47. Appareil selon la revendication 44, caractérisé par le fait que le dispositif présente au moins un capteur (54) qui répond au niveau de remplissage d'un récipient à remplir.

48. Appareil selon la revendication 47, caractérisé par le fait que le capteur (54) est une sonde de niveau qui peut être introduite dans un récipient à remplir.

49. Appareil selon l'une des revendications 47 et 48, caractérisé par le fait que le capteur (54) présente une zone de mesure allongée et produit un signal de mesure dépendant du niveau de remplissage dans la région de la zone de mesure.

50. Appareil selon l'une des revendications 44 à 49, caractérisé par le fait que le dispositif (54, 55) est capable de mettre fin à l'opération de remplissage lorsqu'un niveau déterminé de remplissage est atteint dans un récipient a remplir.

51. Appareil selon la revendication 50, caractérisé par le fait que seul le dispositif (54, 55) met fin à l'opération de remplissage.

52. Appareil selon la revendication 50, caractérisé par le fait que le dispositif (54, 55) met fin à l'opération de remplissage en coopération avec au moins un capteur (8, 9) de la chambre de dosage (2).

53. Appareil selon la revendication 52, caractérisé par le fait qu'un capteur (9) de la chambre de dosage (2) fonctionne prioritairement au dispositif (54, 55).

54. Appareil selon la revendication 52, caractérisé par le fait que le dispositif (54, 55) fonctionne prioritairement à un capteur (8) de la chambre de dosage (2).

55. Appareil selon l'une des revendications 44 à 54, caractérisé par le fait qu'à la chambre de dosage (2) est adjoint un capteur (8) qui, éventuellement en coopération avec un capteur (7) situé plus haut, détermine un volume minimal de remplissage.

56. Appareil selon l'une des revendications 44 à 55, caractérisé par le fait qu'à la chambre de dosage (2) est adjoint un capteur (9) qui, éventuellement en coopération avec un capteur (7) situé plus haut, détermine un volume maximal de remplissage.

57. Appareil selon l'une des revendications 52 à 56, caractérisé par le fait que le dispositif (54, 55) est fait de façon à mettre fin à l'opération de remplissage lorsqu'une hauteur déterminée de remplissage est atteinte si la vanne d'émission (5) n'a pas auparavant été fermée après l'entrée d'un volume déterminé de remplissage dans le récipient à remplir.

58. Appareil selon l'une des revendications 52 à 57, caractérisé par le fait que le dispositif (54, 55) est fait de façon à mettre fin à l'opération de remplissage lorsqu'une hauteur déterminée de remplissage est atteinte si un volume déterminé de remplissage est auparavant entré dans le récipient à remplir.

59. Appareil selon l'une des revendications 44 à 58, caractérisé par le fait que le dispositif (54, 55) peut être mis hors circuit.

60. Appareil selon l'une des revendications 1 à 59, caractérisé par le fait qu'à chaque tubulure de remplissage (6) sont adjointes au moins deux chambres de dosage (2) ayant chacune une vanne d'admission propre (3), une vanne d'émission propre (5) et un capteur propre (7, 8, 9, 44, 50 à 53).
